(19) Europäisches Patentamt
European Patent Office
Office européen des brevets

(11) EP 1 716 208 B2

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**30.06.2021 Patentblatt 2021/26**

(45) Hinweis auf die Patenterteilung:
**12.01.2011 Patentblatt 2011/02**

(21) Anmeldenummer: **05701347.6**

(22) Anmeldetag: **04.02.2005**

(51) Int Cl.:
*C09B 5/62* (2006.01) *C09B 67/22* (2006.01)

(86) Internationale Anmeldenummer:
**PCT/EP2005/001139**

(87) Internationale Veröffentlichungsnummer:
**WO 2005/078023 (25.08.2005 Gazette 2005/34)**

(54) **SCHWARZE PERYLENPIGMENTE**

BLACK PERYLENE PIGMENTS

PIGMENTS DE PERYLENE NOIRS

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **11.02.2004 DE 102004007382**
**30.11.2004 DE 102004057876**

(43) Veröffentlichungstag der Anmeldung:
**02.11.2006 Patentblatt 2006/44**

(73) Patentinhaber: **BASF SE**
**67056 Ludwigshafen am Rhein (DE)**

(72) Erfinder:
- **ERK, Peter**
  **67227 Frankenthal (DE)**
- **STOHR, Andreas**
  **67251 Freinsheim (DE)**
- **BÖHM, Arno**
  **68305 Mannheim (DE)**
- **KURTZ, Walter**
  **67098 Bad Dürkheim (DE)**
- **MIZUGUCHI, Jin**
  **231-0824 Yokohama (JP)**
- **SENS, Benno**
  **67434 Neustadt (DE)**

(74) Vertreter: **Altmann, Andreas**
**Altmann Stößel Dick Patentanwälte PartG mbB**
**Isartorplatz 1**
**80331 München (DE)**

(56) Entgegenhaltungen:

| | |
|---|---|
| **EP-A- 0 061 092** | **EP-A- 0 143 979** |
| **EP-A- 0 698 649** | **EP-A- 1 413 605** |
| **EP-A- 1 413 606** | **EP-A1- 0 443 566** |
| **EP-A1- 0 678 559** | **EP-A1- 1 413 605** |
| **EP-A1- 1 413 606** | **EP-A2- 0 524 904** |
| **EP-A2- 0 780 446** | **WO-A2-02/48267** |
| **CH-A- 373 844** | **CH-A- 373 844** |
| **DE-A1- 3 209 424** | **GB-A- 859 288** |
| **GB-A- 972 485** | **GB-A- 1 438 921** |
| **JP-A- H05 249 719** | **US-A- 1 878 986** |
| **US-A- 2 473 015** | **US-A- 2 857 400** |
| **US-A- 2 998 402** | **US-A- 3 112 289** |
| **US-A- 3 730 750** | **US-A- 3 872 103** |
| **US-A- 3 976 649** | **US-A- 4 077 972** |
| **US-A- 4 115 386** | **US-A- 4 431 806** |
| **US-A- 4 780 531** | **US-A- 5 019 473** |
| **US-A- 5 110 931** | **US-A- 5 225 307** |
| **US-A- 5 296 531** | **US-A- 5 395 722** |
| **US-A- 5 484 674** | **US-A- 5 508 137** |
| **US-A- 5 650 513** | **US-A- 5 693 808** |
| **US-A- 5 891 594** | **US-A- 5 929 239** |
| **US-A- 6 159 275** | **US-A- 6 166 210** |
| **US-A1- 2004 215 015** | **US-B1- 6 220 673** |

- **DATABASE WPI Section Ch, Week 199950 Derwent Publications Ltd., London, GB; Class A89, AN 1999-586119 XP002340007 -& JP 11 256061 A (MITSUBISHI PAPER MILLS LTD) 21. September 1999 (1999-09-21)**
- **DATABASE WPI Section Ch, Week 199533 Derwent Publications Ltd., London, GB; Class E23, AN 1995-252433 XP002340008 & JP 07 157681 A (KONICA CORP) 20. Juni 1995 (1995-06-20) in der Anmeldung erwähnt**
- **Rompp Chemielexikon, 9. Auflage, 1992, pages 3348,3349,3695-3696,**
- **W Herbst, K Hunger: "Industrielle Organische Pigmente", 1995, VCH Verlag, 2. Ed. page 89,**



**(Forts. nächste Seite)**

Bemerkungen:

Die Akte enthält technische Angaben, die nach dem Eingang der Anmeldung eingereicht wurden und die nicht in dieser Patentschrift enthalten sind.

## Beschreibung

Die vorliegende Erfindung betrifft ein Verfahren zur Herstellung von schwarzen Perylenpigmenten, die eines der Isomere der Formel Ia oder Ib

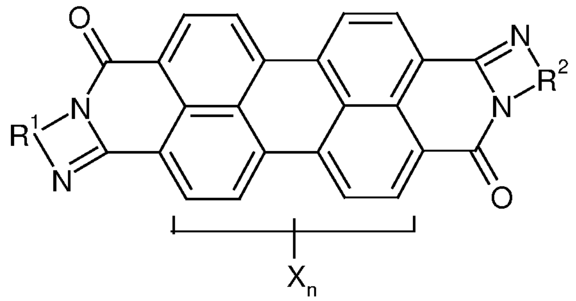

Ia

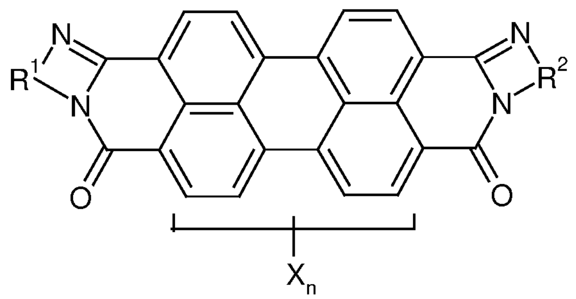

Ib

in der die Variablen folgende Bedeutung haben:

$R^1$, $R^2$ unabhängig voneinander Phenylen, Naphthylen oder Pyridylen, das jeweils ein- oder mehrfach durch $C_1$-$C_{12}$-Alkyl, $C_1$-$C_6$-Alkoxy, Hydroxy, Nitro und/oder Halogen substituiert sein kann; X Halogen; n 0 bis 4, oder eine Mischung beider Isomere enthalten und eine Schwarzzahl ≥ 210 in einem Alkyd/Melamin-Einbrennlack aufweisen, dadurch gekennzeichnet, daß man die bei der Synthese erhaltenen Rohpigmente

a) einer Zerkleinerung und einer Rekristallisation in flüssigem Medium oder
b) einer Zerkleinerung unter gleichzeitiger Rekristallisation unterzieht,

wobei bei der Rekristallisation als flüssiges Medium mindestens ein organisches Lösungsmittel ausgewählt aus Alkoholen, Etheralkoholen, Ethern, Ketonen, aliphatischen Carbonsäuren, Carbonsäureamiden, Carbonsäureestern, Kohlenwasserstoffen oder stickstoffhaltigen, nichtannelierten Heteroaromaten verwendet wird.

Außerdem betrifft die vorliegende Erfindung ein Verfahren zur Herstellung von schwarzen Perylenpigmenten, die eines der Isomere der Formel Ia oder Ib

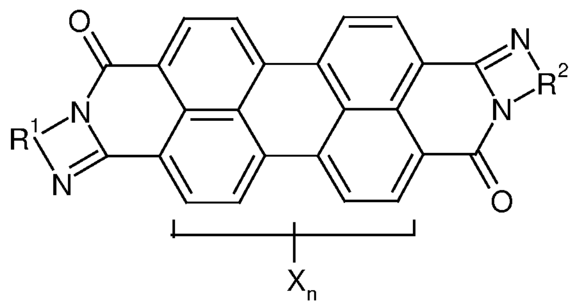

Ia

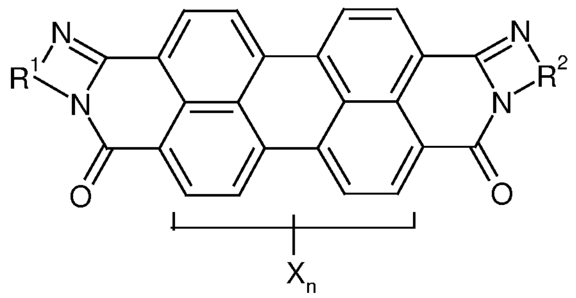

Ib

in der die Variablen folgende Bedeutung haben:

$R^1$, $R^2$ unabhängig voneinander Phenylen, Naphthylen oder Pyridylen, das jeweils ein- oder mehrfach durch $C_1$-$C_{12}$-Alkyl, $C_1$-$C_6$-Alkoxy, Hydroxy, Nitro und/oder Halogen substituiert sein kann; X Halogen; n 0 bis 4, oder eine Mischung beider Isomere enthalten und eine Schwarzzahl ≥ 230 in einem Alkyd/Melamin-Einbrennlack aufweisen, dadurch gekennzeichnet, daß man die bei der Synthese erhaltenen Rohpigmente, nach einer Zerkleinerung, einer Quellung in einer konzentrierten Säure mit einer Konzentration von 70 bis 85 Gew.% unterzieht.

Um Lacke, Druckfarben, Kunststoffe, Gläser, Leder oder auch andere Materialien schwarz einzufärben, werden üblicherweise die Schwarzpigmente Ruß, Anilinschwarz, Eisenoxidschwarz und Chromoxidschwarz oder trichrome Farbstoffmischungen eingesetzt.

Die zuvor benannten pigmentären Farbmittel absorbieren Licht mit Wellenlängen vom Ultraviolett- bis in den fernen Infrarotbereich, also auch die solare Infrarot- und Wärmestrahlung. Materialien, die mit diesen Schwarzpigmenten eingefärbt sind, erwärmen sich deshalb sehr stark unter direkter Sonneneinstrahlung. Werden diese konventionellen Schwarzpigmente als Farbmittel in Beschichtungen für elektronische Bauteile, wie in der Black Matrix bei LC-Displays verwendet, erhält diese Beschichtung hierdurch zudem eine gewisse inhärente elektrische Leitfähigkeit, die die Funktionsfähigkeit der elektronischen Komponenten negativ beeinflußt.

Die trichromen Farbstoffmischungen weisen zwar weder die ungünstige Absorption im Infraroten noch hohe elektrische Leitfähigkeiten auf, als niedermolekulare Verbindungen neigen sie jedoch zur Migration im Anwendungsmedium und zeigen geringe Kompatibilität mit vielen Matrixmaterialien (z.B. gängigen Polyolefinen oder wasserbasierenden Lacken), so daß ihre Einsatzmöglichkeiten stark eingeschränkt sind.

In den letzten Jahren ist der Bedarf an schwarzen Farbmitteln, insbesondere Schwarzpigmenten, die die genannten ungünstigen Eigenschaften nicht aufweisen, für viele Anwendungsbereiche stark gestiegen.

Exemplarisch genannt seien schwarze Beschichtungen mit hohem elektrischen Widerstand für elektronische Bauteile, schwarze Lackierungen und Beschichtungen für den Automobil- und Baubereich, die sich unter Sonneneinstrahlung nicht oder nur gering erwärmen, Mulch- und Schutzfilme mit geringer Selbsterwärmung für die Landwirtschaft, optische Filter und IR-transparente Aktivkomponenten für den Sicherheitsdruck und Kopierschutzsysteme.

Eine weitere interessante Anwendung stellt das Laserdurchstrahlschweißen von Kunststoffteilen und -folien dar. Kunststoffteile, die mit den herkömmlichen Schwarzpigmenten eingefärbt sind, können hierfür nicht eingesetzt werden, da das eingestrahlte Laserlicht, dessen Wellenlänge normalerweise im NIR-Bereich (z.B. bei 808, 940 oder 1064 nm) liegt, von diesen Pigmenten schon an der Oberfläche des zu durchstrahlenden Werkstücks komplett absorbiert wird, den tiefer liegenden Verbindungsbereich zum unten liegenden Werkstück somit gar nicht erreicht und infolgedessen den zur Schaffung einer mechanisch stabilen Verbindung erforderlichen Aufschmelzprozeß in dieser Zone nicht mehr induzieren kann.

Mittlerweile sind Schwarzpigmente auf Perylenbasis (C.I. Pigment Black 31 und 32 (N,N'-Diphenylethylenperylen-3,4:9,10-tetracarbonsäurediimid bzw. N,N'-Di(p-methoxytolyl)perylen-3,4:9,10-tetracarbonsäurediimid) erhältlich, die zwar NIRtransparent sind, deren Absorptionsbande jedoch bei etwa 650 bis 700 nm liegt, so daß sie nicht im gesamten sichtbaren Spektralbereich absorbieren. Diese Pigmente erscheinen daher nicht neutral schwarz, sondern weisen insbesondere in der Weißaufhellung einen unerwünschten Grünstich auf. Zudem zeigen sie in vielen Anwendungsmedien eine erhöhte Löslichkeit und eine unzureichende Temperaturstabilität, was ihre Einsetzbarkeit vor allem bei der Kunststoffeinfärbung stark limitiert.

In den WO-A-03/10241 und 03/10242 werden Perylenpigmente der eingangs definierten Formel Ib sowie Mischungen von Pigmenten der Formeln Ia und Ib ($R^1$, $R^2$ = Phenylen; n = 0) beschrieben, die sich jedoch in ihren physikalischen Eigenschaften von den erfindungsgemäß hergestellten Pigmenten unterscheiden. So zeigen die durch trockene Calcinierung hergestellten Pigmente einen nur unzureichenden Schwarzgrad (d.h., Schwarzzahlen ≤ 200), weshalb die mit ihnen erhaltenen schwarzen Purtonfärbungen einen deutlichen Grün- oder Braunstich aufweisen. Zudem sind diese Pigmente sehr dispergierhart, d.h. im Anwendungsmedium nur unter hohem Energieeintrag und nur unvollständig verteilbar, was die Transparenz und Homogenität der erhaltenen Einfärbungen negativ beeinflußt.

Der Erfindung lag daher die Aufgabe zugrunde, den genannten Nachteilen abzuhelfen und NIR-transparente

Schwarzpigmente hohen Schwarzgrades mit vorteilhaften Anwendungseigenschaften bereitzustellen.

Demgemäß wurden schwarze Perylenpigmente hergestellt, die eines der Isomere der Formel Ia oder Ib

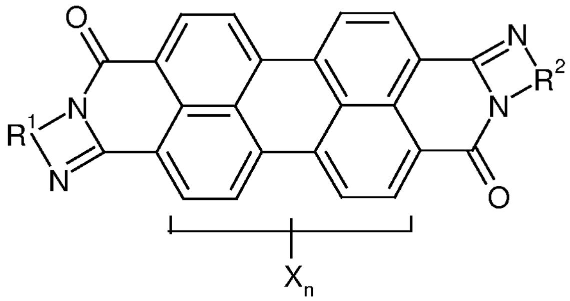

Ia

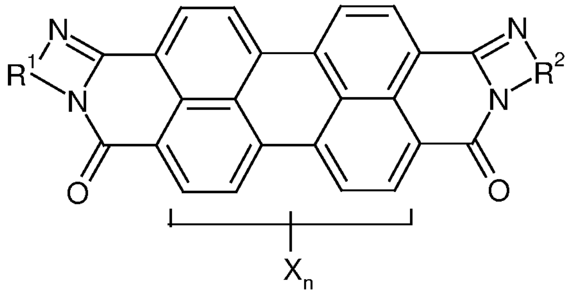

Ib

in der die Variablen folgende Bedeutung haben:

$R^1$, $R^2$ unabhängig voneinander Phenylen, Naphthylen oder Pyridylen, das jeweils ein- oder mehrfach durch $C_1$-$C_{12}$-Alkyl, $C_1$-$C_6$-Alkoxy, Hydroxy, Nitro und/oder Halogen substituiert sein kann; X Halogen; n 0 bis 4, oder eine Mischung beider Isomere enthalten und eine Schwarzzahl ≥ 210 in einem Alkyd/Melamin-Einbrennlack aufweisen, dadurch gekennzeichnet, daß man die bei der Synthese erhaltenen Rohpigmente

a) einer Zerkleinerung und einer Rekristallisation in flüssigem Medium oder
b) einer Zerkleinerung unter gleichzeitiger Rekristallisation unterzieht,

wobei bei der Rekristallisation als flüssiges Medium mindestens ein organisches Lösungsmittel ausgewählt aus Alkoholen, Etheralkoholen, Ethern, Ketonen, aliphatischen Carbonsäuren, Carbonsäureamiden, Carbonsäureestern, Kohlenwasserstoffen oder stickstoffhaltigen, nichtannelierten Heteroaromaten verwendet wird.

Außerdem wurden schwarze Perylenpigmente hergestellt, die eines der Isomere der Formel Ia oder Ib

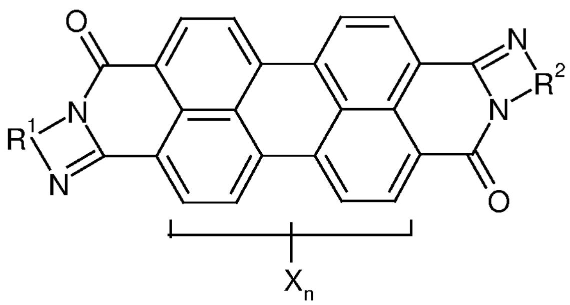

Ia

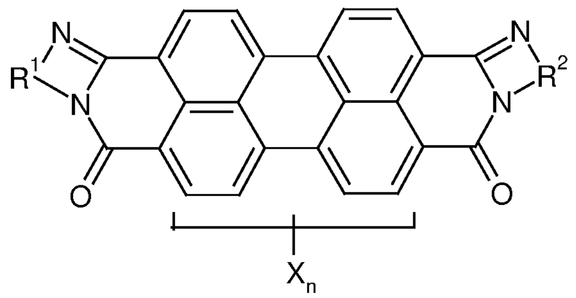

Ib

in der die Variablen folgende Bedeutung haben:

$R^1$, $R^2$unabhängig voneinander Phenylen, Naphthylen oder Pyridylen, das jeweils ein- oder mehrfach durch $C_1$-$C_{12}$-Alkyl, $C_1$-$C_6$-Alkoxy, Hydroxy, Nitro und/oder Halogen substituiert sein kann; X Halogen; n 0 bis 4, oder eine Mischung beider Isomere enthalten und eine Schwarzzahl ≥ 230 in einem Alkyd/Melamin-Einbrennlack aufweisen, dadurch gekennzeichnet, daß man die bei der Synthese erhaltenen Rohpigmente, nach einer Zerkleinerung, einer Quellung in einer konzentrierten Säure mit einer Konzentration von 70 bis 85 Gew.% unterzieht.

Der Begriff "Mischung" soll dabei physikalische Mischungen wie auch bevorzugt feste Lösungen (Mischkristalle) der Verbindungen Ia und Ib umfassen.

Die Phenylen-, Naphthylen- und Pyridylenreste $R^1$ und $R^2$ in den Formeln Ia und Ib können ein- oder mehrfach durch $C_1$-$C_{12}$-Alkyl, insbesondere $C_1$-$C_4$-Alkyl, $C_1$-$C_6$-Alkoxy, vor allem $C_1$-$C_4$-Alkoxy, Hydroxy, Nitro und/oder Halogen, insbesondere Chlor oder Brom, substituiert sein.

Bevorzugt sind die Phenylen-, Naphthylen- und Pyridylenreste jedoch unsubstituiert, wobei die Phenylen- und Naphthylenreste bevorzugt und die Naphthylenreste besonders bevorzugt sind.

Die erfindungsgemäß hergestellten Perylenpigmente absorbieren im gesamten sichtbaren Spektralbereich und zeichnen sich damit durch ihren hohen Schwarzgrad, d.h. in einem Alkyd/Melamin-Einbrennlack durch eine Schwarzzahl ≥ 210, vorzugsweise ≥ 230, aus. Dementsprechend ergeben sie tiefschwarze, neutrale Purtonfärbungen. In der Weißaufhellung werden neutrale Grautöne (z.B. Perylenpigmente Ia/Ib mit $R^1$ = $R^2$ = Naphthylen) bis leicht bis deutlich blaustichige Färbungen (z.B. Perylenpigmente Ia/Ib mit $R^1$ = $R^2$ = Phenylen) erhalten. Selbstverständlich können die Färbungen in üblicher Weise durch geringe Mengen anorganischer oder organischer Pigmente nuanciert werden, die während der Pigmentformierung, schon bei der Pigmentsynthese oder erst dem formierten Perylenpigment zugegeben werden können.

Die erfindungsgemäß hergestellten Perylenpigmente sind im NIR-Bereich transparent, die Transmission ist dementsprechend im allgemeinen > 80%.

Sie weisen in der Regel eine Primärteilchengröße ≤ 800 nm, bevorzugt ≤ 500 nm, besonders bevorzugt ≤ 200 nm, auf und sind dispergierweich, d.h. sie weisen z.B. bei der Kunststoffeinfärbung eine Dispergierhärte DH < 5 gemäß DIN 53775, Blatt 7, auf.

Sie werden nach dem erfindungsgemäßen Verfahren hergestellt, welches dadurch gekennzeichnet ist, daß man die bei der Synthese erhaltenen Rohpigmente

a) einer Zerkleinerung und gewünschtenfalls einer Rekristallisation in flüssigem Medium oder

b) einer Zerkleinerung unter gleichzeitiger Rekristallisation unterzieht.

Die Herstellung der bei der Herstellung der Perylenpigmente eingesetzten Rohpigmente kann auf allgemein bekannte Weise durch Kondensation von Perylen-3,4:9,10-tetracarbonsäure(dianhydrid) mit dem entsprechenden aromatischen Diamin bei erhöhter Temperatur (z.B. 150 bis 250°C) in einem hochsiedenden organischen Lösungsmittel, wie Nitrobenzol, Tri- und Dichlorbenzol, α-Chlornaphthalin, Chinolin, Tetralin, N-Methylpyrrolidon, N,N-Dimethylformamid, Ethylenglykol, Eisessig und cyclischen Hamstoffderivaten, oder in Wasser erfolgen (vgl. z.B. CH 373 844, GB 972 485, JP-A-07-157 681).

Die Reaktion erfolgt dabei in zwei Schritten. Im ersten Schritt reagiert nur eine der beiden Aminogruppen zum zugehörigen Diimid, der Ringschluß im zweiten Reaktionsschritt erfolgt nach längerem Erhitzen und kann durch Zugabe eines Katalysators, wie Zinkchlorid, Zinkacetat, Zinkoxid, Essigsäure, Salzsäure, p-Toluolsulfonsäure oder eines Amins, z.B. Piperazin, beschleunigt werden.

Besonders vorteilhaft können bei der Pigmentformierung die Rohpigmente eingesetzt werden, die nach dem Verfahren durch Kondensation von Perylen-3,4:9,10-tetracarbonsäuredianhydrid mit einem aromatischen ortho- bzw. peri-Diamin, das den Arylenrest $R^1$ oder $R^2$ und gewünschtenfalls Reste X aufweist (also z.B. 1,2-Phenylen, 1,2-, 2,3- und 1,8-Naphthylen), und anschließende Cyclisierung erhalten werden, welches dadurch gekennzeichnet ist, daß man

Kondensation und Cyclisierung in Phenol oder einem stickstoffhaltigen, nichtannelierten Heteroaromaten als Reaktionsmedium durchführt.

Als stickstoffhaltige, nichtannelierte Heteroaromaten sind dabei insbesondere solche Heteroaromaten geeignet, die nur Stickstoffatome als Heteroatome enthalten, es können jedoch auch solche Heteroaromaten verwendet werden, die neben Stickstoffatomen Sauerstoff- oder Schwefelatome enthalten, wie Oxazol, Isoxazol, Thiazol und Isothiazol.

Beispiele für bevorzugte Heteroaromaten sind Pyridin, Pyrrol, Pyrazol, Imidazol, 1,2,4- und 1,2,3-Triazol und Tetrazol. Bei den Heteroaromaten, die mehr als ein Stickstoffatom enthalten, kann das Wasserstoffatom an der N-H-Funktion z.B. durch einen gesättigten oder ungesättigten aliphatischen oder cycloaliphatischen Rest, vor allem einen $C_1$-$C_6$-Alkylrest, ersetzt sein. Desweiteren können auch die in den Ringen enthaltenen Kohlenstoffatome durch diese Reste, Halogenatome oder Nitrogruppen substituiert sein. Beispiele für besonders geeignete Verbindungen sind 1-Methyl- und 1-Ethylimidazol.

Besonders bevorzugte Heteroaromaten sind Imidazol und 1-Methylimidazol.

Selbstverständlich können auch Mischungen der stickstoffhaltigen, nichtannelierten Heteroaromaten als Reaktionsmedium eingesetzt werden.

Kondensation und vor allem auch Cyclisierung verlaufen in diesen Reaktionsmedien wesentlich leichter als in den bei den bekannten Verfahren verwendeten Lösungsmitteln, so daß man Reaktionstemperaturen im Bereich von 130 bis 195°C, insbesondere 150 bis 190°C, wählen kann, ohne verlängerte Reaktionszeiten in Kauf nehmen zu müssen. So liegen für das erfindungsgemäße Verfahren übliche Reaktionszeiten bei etwa 3 bis 8 h.

In der Regel werden 1,5 bis 10 g, bevorzugt 2 bis 5 g, Phenol oder stickstoffhaltiger, nichtannelierter Heteroaromat je g Perylenpigment eingesetzt.

Das Molverhältnis der Edukte aromatisches Diamin und Perylen-3,4:9,10-tetracarbonsäuredianhydrid liegt im allgemeinen bei 2 : 1 bis 3:1, vorzugsweise bei 2,1 : 1 bis 2,4 : 1.

Gewünschtenfalls kann man dem Reaktionsgemisch bei der Synthese in Phenol einen der oben genannten Katalysatoren zusetzen, wobei Piperazin bevorzugt ist. Übliche Einsatzmengen betragen dann 0,1 bis 1,35 mol Katalysator je mol Produkt. Bei der Synthese in einem stickstoffhaltigen, nichtannelierten Heteroaromaten kann der Zusatz eines Katalysators vorteilhaft unterbleiben.

Verfahrenstechnisch geht man bei dem Verfahren zur Herstellung der Perylenrohpigmente in Phenol wie folgt vor:

Man legt eine gerührte Phenolschmelze von etwa 50 bis 70°C vor, gibt Perylen-3,4:9,10-tetracarbonsäuredianhydrid, Katalysator und aromatisches Diamin zu und hält die Mischung 2 bis 8 h auf der gewünschten Reaktionstemperatur im bevorzugten Bereich von 140 bis 190°C. Hierbei destilliert das entstehende Reaktionswasser als Azeotrop mit Phenol ab. Zur Verdünnung des Ansatzes gibt man nach Abkühlen auf etwa 60 bis 130°C einen niederen aliphatischen Alkohol, z.B. Methanol, zu und rührt etwa 1 bis 2 h bei 40 bis 65°C nach.

Bei der Herstellung der Perylenrohpigmente im Heteroaromaten geht man verfahrenstechnisch zweckmäßigerweise so vor, daß man Perylen-3,4:9,10-tetracarbonsäuredianhydrid und aromatisches Diamin im Heteroaromaten vorlegt, auf die gewünschte Reaktionstemperatur von 130 bis 195°C erhitzt und das entstehende Reaktionswasser z.B. durch Auskreisen aus dem Reaktionsgemisch entfernt.

Die Isolierung des Perylenrohpigments kann anschließend in beiden Fällen wie üblich durch Abfiltrieren, Waschen und Trocknen erfolgen.

Die bei der Synthese und auch bei den bekannten Herstellungsverfahren erhaltenen Rohpigmente fallen je nach enthaltenem Rest $R^1$ und $R^2$ und verwendetem Lösungsmittel in unterschiedlicher Form an.

So werden Perylenpigmente, bei denen $R^1$ und $R^2$ Phenylen und n = 0 bedeuten, bei der Synthese in Phenol oder einem stickstoffhaltigen, nichtannelierten Heteroaromaten in der Regel in Form großer Kristalle meist sehr heterogener Gestalt oder auch als teilamorphe Pulver erhalten.

Perylenpigmente, bei denen $R^1$ und $R^2$ Naphthylen und n = 0 bedeuten, fallen jedoch in der Regel bereits bei der erfindungsgemäßen Synthese in pigmentärer Form, also in einer Kristallgröße von < 1 µm, an.

Eine besonders geeignete Ausführungsform für die Variante a) des oben genannten erfindungsgemäßen Verfahrens zur Herstellung der erfindungsgemäß hergestellten Perylenpigmente besteht darin, daß man die Rohpigmente zunächst einer Trockenmahlung in An- oder Abwesenheit eines Salzes als Mahlhilfsmittel und dann einer Rekristallisation in einem organischen Lösungsmittel, gewünschtenfalls im Gemisch mit Wasser, in der Wärme unterzieht.

Für die Trockenmahlung eignen sich beispielsweise Kugelmühlen, Schwingmühlen, Planetenmühlen und Attritoren. Geeignete Mahlkörper sind z.B. Stahlkugeln, Silicium/Aluminium/Zirkonoxidperlen, Glasperlen und Achatkugeln, die üblicherweise einen Durchmesser im Bereich von 0,1 bis 5 cm aufweisen.

Aus Sicherheitsgründen kann es vorteilhaft sein, die Mahlung unter Inertgasatmosphäre durchzuführen.

Die Trockenmahlung kann auch in Form einer Salzmahlung durchgeführt werden. Als Mahlhilfsmittel werden dabei wasserlösliche anorganische Salze verwendet, die mindestens eine Löslichkeit von 10 g/100 ml Wasser haben. Bevorzugte Salze sind z.B. Aluminiumsulfat, Natriumsulfat, Natriumcarbonat, Calciumchlorid, Kaliumchlorid und Natriumchlorid, mit oder ohne Kristallwasser, wobei Natriumsulfat, Kaliumchlorid und Natriumchlorid besonders bevorzugt

sind. Zur Entfernung des Salzes wird das Mahlgut in Wasser angerührt, abfiltriert und gewaschen.

Gewünschtenfalls kann das bei der Mahlung mit Stahlkugeln erhaltene Mahlgut zur Entfernung eventuell vorhandenen Eisenabriebs einer Nachbehandlung mit Salzsäure unterzogen werden.

Vorzugsweise wird so lange gemahlen, bis das Mahlgut eine mittlere Primärteilchengröße < 30 nm aufweist.

Als flüssiges Medium für die anschließende Rekristallisation kann eine Vielzahl von organischen Lösungsmitteln verwendet werden.

Geeignete Lösungsmittel sind z.B. Alkohole, Etheralkohole, Ether, Ketone, aliphatische Carbonsäuren, Carbonsäureamide, Carbonsäureester, Kohlenwasserstoffe sowie die bei dem ebenfalls erfindungsgemäßen Verfahren zur Herstellung der Rohpigmente eingesetzten stickstoffhaltigen, nichtannelierten Heteroaromaten. Selbstverständlich können auch Mischungen dieser Lösungsmittel eingesetzt werden.

Als Beispiele für besonders geeignete Lösungsmittel seien neben den oben aufgeführten stickstoffhaltigen, nichtannelierten Heteroaromaten im einzelnen genannt:

aliphatische und araliphatische, einwertige oder mehrwertige Alkohole mit bis zu 10 C-Atomen, wie Methanol, Ethanol, Propanol, Isopropanol, Butanol, Isobutanol, tert.-Butanol, Amylalkohol, Isoamylalkohol, Hexanol, Isohexanol, Heptanol, Octanol, 2-Ethylhexanol, Ethylenglykol, 1,2- und 1,3-Propylenglykol, Cyclohexanol, Methylcyclohexanol, Benzylalkohol und 2-Phenylethanol;

Mono- und Di-$C_2$-$C_3$-alkylenglykolmono-$C_1$-$C_4$-alkylether, wie Ethylenglykolmonomethyl-, -ethyl- und -butylether und Diethylenglykolmonomethyl- und -ethylether;

acyclische und cyclische aliphatische Ether mit bis zu 10 C-Atomen, wie Dipropylether, Diisopropylether, Dibutylether, Diisobutylether, Tetrahydrofuran, Dioxan, Diethylenglykoldimethyl- und -diethylether;

acyclische und cyclische aliphatische und araliphatische Ketone mit bis zu 10 C-Atomen, wie Aceton, Methylethylketon, Methylpropylketon, Methylbutylketon, Diethylketon, Methylisopropylketon, Methylisobutylketon, Cyclopentanon, Cyclohexanon, Methylcyclohexanon, Acetophenon und Propiophenon;

aliphatische Carbonsäuren mit bis zu 4 C-Atomen, wie Ameisensäure, Essigsäure, Propionsäure und Buttersäure;

Amide und $C_1$-$C_4$-Alkylamide von aliphatischen Carbonsäuren mit bis zu 4 C-Atomen, wie Formamid, N,N-Dimethyl- und N,N-Diethylformamid, N,N-Dimethyl- und N,N-Diethylacetamid, N,N-Dimethyl- und N,N-Diethylpropionsäureamid und N-Methylpyrrolidon;

Ester aromatischer Carbonsäuren mit insgesamt bis zu 12 C-Atomen, wie Phthalsäuredimethylester und Phthalsäurediethylester;

alicyclische und aromatische Kohlenwasserstoffe, wie Cyclohexan, Benzol, Toluol, Xylol (alle Isomere), Mesitylen (alle Isomere), Ethylbenzol, Chlorbenzol, o-Dichlorbenzol, Trichlorbenzol, Nitrobenzol, Phenol, Naphthalin, Methylnaphthalin, Dimethylnaphthalin, Tetrahydronaphthalin, Decahydronaphthalin und Chinolin.

Bevorzugt werden für die Rekristallisation solche Lösungsmittel verwendet, die sich bei der Aufarbeitung leicht entfernen lassen, z.B. durch Auswaschen mit Wasser, gegebenenfalls unter Säurezusatz, azeotrope Destillation mit Wasser, Wasserdampfdestillation oder durch Trocknen des gesamten Ansatzes (beispielsweise durch Abdestillieren des Lösungsmittels).

Besonders bevorzugt werden solche Lösungsmittel eingesetzt, die einen Siedepunkt von $\leq$ 150°C haben und sich unzersetzt und rückstandsfrei verdampfen lassen, z.B. $C_1$-$C_5$-Alkanole, Ketone, wie Methylethylketon, Ether, wie Tetrahydrofuran und Dioxan, und Kohlenwasserstoffe, wie Cyclohexan, Benzol, Toluol, Xylol und Chlorbenzol, und deren Gemische, wobei Xylol und Toluol ganz besonders bevorzugt sind.

Weitere besonders bevorzugte Beispiele für die Rekristallisationslösungsmittel sind die für die Pigmentsynthese eingesetzten stickstoffhaltigen, nichtannelierten Heteroaromaten.

Ganz besonders bevorzugt sind dabei Mischungen von organischem Lösungsmittel und Wasser.

Die Menge an Lösungsmittel ist im allgemeinen nicht kritisch und kann innerhalb weiter Grenzen variiert werden. In der Regel kommen 3 bis 20 g, vorzugsweise 4 bis 15 g, Lösungsmittel je g Mahlgut zum Einsatz.

Üblicherweise nimmt man die Rekristallisation bei einer Temperatur von 25 bis 260°C, insbesondere 60 bis 180°C, vor.

Die Rekristallisation kann unter Dispergieren des Mahlguts im Lösungsmittel oder auch durch einfaches Verweilenlassen des Mahlguts im Lösungsmittel erfolgen. Bevorzugt wird die Mischung aus Mahlgut und Lösungsmittel

gerührt.

Die Dauer der Rekristallisation hängt von der Temperatur und dem Lösungsmittel ab. In der Regel ist sie in 1 bis 24 h beendet.

Eine besonders geeignete Ausführungsform für die Variante b) des oben genannten erfindungsgemäßen Herstellungsverfahrens besteht darin, daß man die Rohpigmente in Gegenwart eines rekristallisierend wirkenden organischen Lösungsmittels und eines anorganischen Salzes einer Knetung in der Wärme unterzieht.

Die Knetung wird bevorzugt in gängigen Doppelwellenknetern durchgeführt, es können jedoch auch einwellige Kneter, Mischer oder Extruder verwendet werden. Ebenfalls möglich ist auch das Verkollern.

Als anorganisches Salz eignen sich dabei die vorstehend für die trockene Salzmahlung genannten wasserlöslichen Salze, insbesondere z.B. Natriumchlorid und Natriumsulfat.

Üblicherweise werden technische Salze mit oder ohne vorherige Mikronisierung verwendet. Bevorzugt haben die Salze eine mittlere Teilchengröße von 5 bis 200 μm, besonders bevorzugt von 10 bis 50 μm. Außerdem haben sie zweckmäßigerweise nur eine Löslichkeit von ≤ 100 mg/l, insbesondere ≤ 10 mg/l (jeweils bei 20°C), in dem organischen Lösungsmittel, bevorzugt sind sie darin praktisch unlöslich.

Auch das bei der Knetung eingesetzte organische Lösungsmittel weist bevorzugt in Wasser eine Löslichkeit von mindestens 10 g/100 ml auf und kann neutral, aber auch sauer oder basisch sein. Neben den für die Rekristallisation bei der ersten Verfahrensvariante aufgeführten Lösungsmittelklassen sind auch Sulfone und Sulfoxide als Lösungsmittel für die Knetung geeignet. Selbstverständlich ist auch hier der Einsatz von Lösungsmittelmischungen möglich.

Als Beispiele für besonders geeignete Lösungsmittel seien im einzelnen genannt:

Ethylenglykol, Diethylenglykol, Triethylenglykol, Dipropylenglykol, Ethylenglykolmonobutylether, Methylethylketon, Cyclohexanon, Diacetonalkohol, Dimethylformamid, Dimethylacetamid, N-Methylpyrrolidon, Butylacetat, Glycerintriacetat, Sulfolan und Dimethylsulfoxid.

In der Regel enthält die Knetmasse je g Rohpigment 0,5 bis 2 g, vorzugsweise 0,6 bis 1 g, organisches Lösungsmittel und 1 bis 10 g, insbesondere 3 bis 8 g, anorganisches Salz.

Die Knettemperatur beträgt im allgemeinen 20 bis 180°C, bevorzugt 80 bis 150°C.

Die Umdrehungsgeschwindigkeit wird zweckmäßigerweise so gewählt, daß die Knetmasse homogen und unter gleichmäßiger Scherung bewegt wird.

Die Knetdauer liegt üblicherweise bei 0,5 bis 24 h, vor allem 1 bis 8 h.

Das anorganische Salz und das organische Lösungsmittel können nach der Knetung mit Wasser ausgewaschen werden.

Eine weitere Ausführungsform für die Variante b) des oben genannten erfindungsgemäßen Herstellungsverfahrens besteht darin, daß man die Rohpigmente einer Naßmahlung in Gegenwart eines rekristallisierend wirkenden organischen Lösungsmittels, gewünschtenfalls im Gemisch mit Wasser, unterzieht.

Die Naßmahlung kann vorteilhaft in einer Rührwerkskugelmühle vorgenommen werden.

Als organisches Lösungsmittel sind im Prinzip die für die Variante a) genannten Lösungsmittel geeignet, wobei wasserlösliche Lösungsmittel bevorzugt sind.

Bevorzugt wird die Naßmahlung in wäßrigem Medium durchgeführt. Wasser- und Lösungsmittelmenge werden dabei vorteilhaft so gewählt, daß der Pigmentgehalt in der Mahlpaste bei 20 bis 50 Gew.-% liegt. Der Lösungsmittelanteil beträgt dabei üblicherweise 1 bis 50 Gew.-%, bezogen auf das Rohpigment.

Die Mahltemperatur beträgt im allgemeinen 5 bis 100°C, vorzugsweise 10 bis 85°C.

Die Perylenpigmente können auch nach dem weiteren erfindungsgemäßen Verfahren hergestellt werden, welches dadurch gekennzeichnet ist, daß man die bei der Synthese erhaltenen Rohpigmente, gewünschtenfalls nach einer Zerkleinerung, einer Quellung in einer konzentrierten Säure unterzieht.

Hierzu wird das Rohpigment üblicherweise für eine bestimmte Zeit in der konzentrierten Säure bei einer bestimmten Temperatur gerührt. Der Ansatz wird anschließend auf Wasser gegeben, dann wird das gefällte Pigment abfiltriert, gewaschen, getrocknet und pulverisiert.

Beispiele für geeignete Säuren sind neben organischen Säuren, wie Trifluoressigsäure, insbesondere konzentrierte anorganische Säuren, wie Polyphosphorsäure und vor allem Schwefelsäure.

Die verwendete Säure weist im allgemeinen eine Konzentration von 50 bis 90 Gew.-%, vorzugsweise von 70 bis 85 Gew.-%, auf.

Üblicherweise wird soviel Säure verwendet, daß die Pigmentkonzentration bei 5 bis 20 Gew.-%, insbesondere bei 7 bis 15 Gew.-%, liegt.

Die Quellung wird in der Regel bei 20 bis 100°C, bevorzugt bei 30 bis 60°C, durchgeführt und ist im allgemeinen in 1 bis 24 h, vor allem in 4 bis 12 h, abgeschlossen.

Zur Steuerung der Kristallgröße kann es vorteilhaft sein, die Pigmentformierung, d.h. die Überführung der Rohpigmente in die erfindungsgemäß hergestellten Perylenpigmente, in Gegenwart von Pigmentsynergisten durchzuführen, wobei üblicherweise etwa 0,01 bis 0,1 g Synergist je g Pigment eingesetzt werden. Die Pigmentsynergisten können bereits im Vorzerkleinerungsschritt, aber auch erst im Rekristallisationsschritt zugesetzt werden. Die Pigmentsynergisten können auch bereits bei der Pigmentsynthese zugesetzt werden, so daß bereits hier Einfluß auf die Teilchenform genommen wird. Schließlich können die Perylenpigmente auch erst für die Anwendung mit den Pigmentsynergisten gemischt werden.

Pigmentsynergisten sind Verbindungen, die den Pigmentchromophor ganz oder teilweise in ihrer Molekülstruktur enthalten und vorzugsweise saure oder basische Gruppen aufweisen. Dabei muß die Struktur des Pigmentsynergisten nicht mit der Struktur des Pigments, dessen Kristallisation beeinflußt werden soll, übereinstimmen. So können im vorliegenden Fall nicht nur Pigmentsynergisten auf Basis der Perylenstruktur, sondern z.B. auch solche auf Basis der Kupferphthalocyaninstruktur eingesetzt werden.

Besonders geeignete und ebenfalls Pigmentsynergisten können auf einem oder beiden Isomeren der Formel Ia' oder Ib'

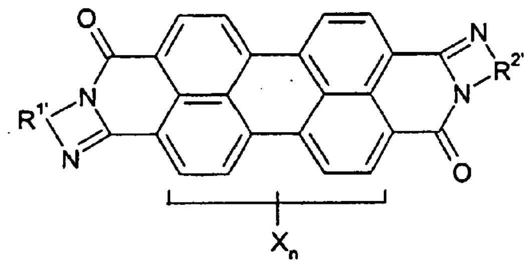

Ia'

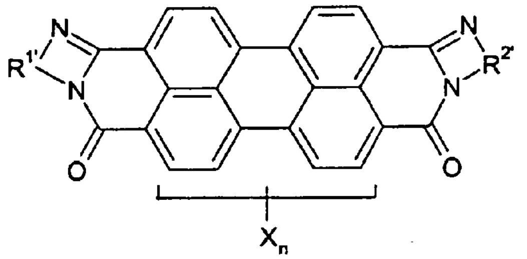

Ib'

basieren, in der die Variablen folgende Bedeutung haben:

$R^{1'}$, $R^{2'}$, unabhängig voneinander Phenylen, Naphthylen oder Pyridylen, das jeweils ein- oder mehrfach durch -COO- $M^+$, $-COOR^3$, $-CONR^3R$, $-COO^-$ $N^+R^3R^4R^5R^6$, $-SO_2NR^3R^4$, $-CH_2NR^3R^4$, $-CH_2N^+R^3R^4R^5R^6$ $R^3$-$COO^-$ und/oder $-CH_2R^7$ substituiert ist und zusätzlich ein- oder mehrfach durch $C_1$- $C_{12}$-Alkyl, $C_1$-$C_6$-Alkoxy, Hydroxy, Nitro und/oder Halogen substituiert sein kann;

$R^3$, $R^4$, $R^5$, $R^6$ unabhängig voneinander Wasserstoff; $C_1$-$C_{12}$-Alkyl oder $C_2$-$C_{12}$-Alkenyl, dessen Kohlenstoffkette jeweils durch eine oder mehrere Gruppierungen -O-, -S-, $-NR^8-$, -CO- oder $-SO_2-$ unterbrochen sein kann und/oder das ein- oder mehrfach durch Hydroxy, Halogen, Aryl, $C_1$-$C_4$-Alkoxy und/oder Acetyl substituiert sein kann; $C_3$-$C_8$-Cycloalkyl, dessen Kohlenstoffgerüst durch eine oder mehrere Gruppierungen -O-, -S-, $-NR^8-$ oder -CO- unterbrochen sein kann und/oder durch Acetyl substituiert sein kann;

$R^7$ Phthalimidyl;

$R^8$ Wasserstoff oder $C_1$-$C_8$-Alkyl;

$M^+$ Wasserstoff oder ein Metallkation, insbesondere ein Alkalimetallkation, vor allem Natrium oder Kalium;

X Halogen, insbesondere Chlor oder Brom;

n 0 bis 4.

Weiterhin sind als Pigmentsynergisten Verbindungen der Formel Ia' und/oder Ib' geeignet, die an den Resten $R^{1'}$ und $R^{2'}$ durch Sulfonsäuregruppen, die als Salz vorliegen können, substituiert sind. In der US-A-2004/0215015 wird die Verwendung dieser Verbindungen für flüssigkristalline Systeme beschrieben.

Die Anwesenheit von Pigmentsynergisten wirkt sich oftmals auch positiv auf die Dispergierbarkeit und die Flockungsstabilität der erfindungsgemäß hergestellten Perylenpigmente im Anwendungsmedium und damit auch auf die Rheologie des Anwendungsmediums, z.B. eines Lacksystems, aus.

Die Dispergierbarkeit der erfindungsgemäß hergestellten Perlyenpigmente kann zudem oft dadurch verbessert werden, daß man die Pigmente mit herkömmlichen Additiven in Kontakt bringt, die an den für die Pigmentsynergisten

genannten Stellen des Gesamtherstellungsprozesses oder aber erst bei der Anwendung des Perylenpigments zum Einsatz kommen können. Neben Additiven auf Basis von Kolophoniumderivaten sind insbesondere auch für die Kunststoffeinfärbung Additive auf Basis von natürlichen und synthetischen Wachsen geeignet. Beispielhaft seien Wachse auf Basis von Polyethylen und von Polypropylen, die auch oxidiert sein können, von Polyethylenoxid, von ethoxylierten Fettalkoholen, von Polyethylenoxid/Polypropylenoxid/Blockcopolymerisaten, von Fettsäureestern (z.B. Montanwachsen), von Fettsäureamiden und von Ethylen/Vinylacetat-Copolymerisaten genannt.

Die erfindungsgemäß hergestellten Perylenpigmente eignen sich hervorragend zur Einfärbung von hochmolekularen organischen und anorganischen Materialien natürlicher und synthetischer Herkunft.

Als Beispiele für hochmolekulare synthetische organische Materialien seien genannt:

Polyolefine, wie Polyethylen, Polypropylen, Polybutylen, Polyisobutylen und Poly-4-methyl-1-penten, Polyolefincopolymere, wie Luflexen® (Basell), Nordel® (Dow) und Engage® (DuPont), Cycloolefincopolymere, wie Topas® (Celanese), Polytetrafluoroethylen (PTFE), Ethylen/Tetrafluoroethylen-Copolymere (ETFE), Polyvinylidendifluorid (PVDF), Polyvinylchlorid (PVC), Polyvinylidenchlorid, Polyvinylalkohole, Polyvinylester, wie Polyvinylacetat, Vinylestercopolymere, wie Ethylen/Vinylacetat-Copolymere (EVA), Polyvinylalkanale, wie Polyvinylacetal und Polyvinylbutyral, (PVB), Polyvinylketale, Polyamide, wie Nylon® [6], Nylon [12] und Nylon [6,6] (DuPont), Polyimide, Polycarbonat, Polycarbonat-Copolymere und physikalische Blends von Polycarbonaten mit Acryl-Butadien-Styrol-Copolymeren, Acrylnitril-Styrol-Acrylester-Copolymeren, Polymethylmethacrylaten, Polybutylacrylaten, Polybutylmethacrylaten, Polybutylenterephthalaten und Polyethylenterephthalaten, Polyester wie Polyethylenterephthalat (PET), Polybutylenterephthalat (PBT) und Polyethylennaphthalat (PEN), Copolymerisate, Umesterungsprodukte und physikalische Gemische (Blends) der zuvor genannten Polyalkylenterephthalate, Poly(meth)acrylate, Polyacrylamide, Polyacrylnitril, Poly(meth)acrylat/Polyvinylidendifluorid-Blends, Polyurethane, Polystyrol, Styrolcoplymere, wie Styrol/Butadien-Copolymere, Styrol/-Acrylnitril-Copolymere (SAN), Styrol/Ethylmethacrylat-Copolymere, Styrol/Butadien/Ethylacrylat-Copolymere, Styrol/Acrylnitril/Methacrylat-Copolymere, Acrylnitril/Butadien/Styrol-Copolymere (ABS) und Methacrylat/Butadien/- Styrol-Copolymere (MBS), Polyether wie Polyphenylenoxid, Polyetherketone, Polysulfone, Polyethersulfone, Polyglykole wie Polyoxymethylen (POM), Polyaryle wie Polyphenylen, Polyarylenvinylene, Silicone, lonomere, thermoplastische und duroplastische Polyurethane sowie deren Mischungen.

Als einfärbbare hochmolekulare organische Materialien sind dabei nicht nur die Polymere an sich ("Kunststoffe"), die als Pulver, plastische Massen, Schmelzen oder in Form von Spinnlösungen vorliegen können, zu verstehen, sondern auch die Lacke, Druckfarben und Anstrichmittel, die diese Materialien in gelöster oder dispergierter Form enthalten.

Die Einarbeitung der erfindungsgemäß hergestellten Perylenpigmente in die Kunststoffe kann nach allen bekannten Methoden erfolgen, z.B. durch gemeinsames Extrudieren (vorzugsweise mit einem Ein- oder Zweischneckenextruder), Walzen, Kneten, Pressen oder Mahlen, wobei die Kunststoffe zu Kunststofformkörpem, Endlosprofilen, Platten, Folien, Fasern. Filmen und Beschichtungen verarbeitet werden können.

Als Beispiele für hochmolekulare synthetische anorganische Materialien seien aufgeführt:
niedrigschmelzende Borosilikat-Glasfritts, gegebenenfalls organisch modifizierte Silikatsole und -gele, über einen Sol-Gel-Prozeß hergestellte, gegebenenfalls dotierte Silikat-, Aluminat-, Zirkonat- und Alumosilikatbeschichtungen und Schichtsilikate.

Als Beispiel für natürliche mit den erfindungsgemäß hergestellten Perylenpigmenten einfärbbare Materialien seien Leder, z.B. Schuhleder, Bekleidungsleder und Polsterleder, genannt. Selbstverständlich können auch lederartige Materialien synthetischer Herkunft eingefärbt werden.

Beispielhaft seien im folgenden einige ausgewählte, besonders interessante Anwendungsgebiete für die erfindungsgemäß hergestellten Perylenpigmente genannt.

Ein interessantes Gebiet stellt der Einsatz in Sicherheitsdruckfarben dar, z.B. Herstellung und Druck von Banknoten, Aktien, Scheckformularen, Kreditkarten, Briefmarken, Lotteriescheinen und fälschungssicheren Verpackungen, beispielsweise für Pharmaprodukte und hochwertige Markenartikel.

Hierfür besonders geeignet sind die erfindungsgemäß hergestellten Perylenpigmente der Formel Ia und/oder Ib, in der $R^1$ und $R^2$ Phenylen und n = 0 bedeuten, da diese Pigmente eine ausgeprägte Absorption im sichtbaren Bereich von 400 bis 800 nm aufweisen und im NIR-Bereich (Bandkante etwa 750 nm) transparent sind. Ebenfalls gut geeignet sind die erfindungsgemäß hergestellten Perylenpigmente der Formel Ia und/oder Ib, in der $R^1$ und $R^2$ Naphthylen und n = 0 bedeuten, die ebenfalls im sichtbaren Bereich stark absorbieren und im NIR-Bereich transparent werden (Bandkante ca. 950 nm).

Die mit diesen Pigmenten hergestellten schwarzen Drucke werden unter Betrachtung im NIR-Licht transparent, d.h. sie werden unsichtbar. Man kann also z.B. ein mit einem üblichen Rußpigment gedrucktes Motiv mit der IR-transparenten Druckfarbe überdrucken. Bei Betrachtung im NIR-Licht wird das ursprüngliche Motiv wieder sichtbar.

Die Einarbeitung der erfindungsgemäß hergestellten Perylenpigmente in die Bindemittelsysteme dieser Sicherheitsdruckfarben wie auch jeder Druckfarbe kann mit üblichen Dispergieraggregaten, z.B. Rührwerkskugelmühlen oder Walzenstühlen, erfolgen. Auch können alle bekannten Druckverfahren, beispielsweise Offsetdruck, Tiefdruck, Hochdruck, Intagliodruck, Siebdruck und Tampondruck, angewendet werden.

Weiterhin können die erfindungsgemäß hergestellten Perylenpigmente auch vorteilhaft in Lacken und Laminaten eingesetzt werden, um einen besseren Wärmeschutz bei Schwarz- und Graulackierungen oder -folienbeschichtungen sowie bei Lackierungen oder Folienbeschichtungen, die Schwarzpigmente als eine Farbmischungskomponente enthalten, zu erreichen. Dabei ist sicherzustellen, daß die IR-Strahlung entweder von der Lackschicht bzw. auflaminierten Folie selbst oder von ihrem Untergrund reflektiert wird, was durch Zusatz von im IR-Bereich stark streuenden Fremdpartikeln, wie Titandioxidpigmenten und anorganischen Mischphasenpigmenten (z.B. Sicotan® Pigmente, BASF) oder im IR-Bereich stark reflektierenden Fremdpartikeln, wie Aluminiumflakes und Glanzpigmenten, z.B. solchen auf Basis beschichteter Aluminiumplättchen, zum Lack bzw. zur Laminierungsfolie oder einem Einsatz metallischer oder diffus streuender weißer Untergründe erreicht wird.

Außerdem können die erfindungsgemäß hergestellten Perylenpigmente, insbesondere die bevorzugten Perylenpigmente ($R^1$, $R^2$: Phenylen bzw. Naphthylen), aufgrund ihrer sehr niedrigen elektrischen Leitfähigkeit vorteilhaft als Bestandteil der Black Matrix in LC-Displays zum Einsatz kommen. In diesen Colorfiltern werden die roten, grünen und blauen Farbfelder durch ein schwarzes Raster, die sogenannte Black Matrix, separiert. Dazu werden mit den erfindungsgemäßen Perylenpigmenten Resist-Tinten hergestellt, die nach Applikation und Aushärten mit UV-Licht ein Black Matrix-Raster mit dem gewünschten hohen Widerstandswert von > $10^{13}$ Ω und hoher optischer Dichte bei geringer Schichtdicke ergeben.

Die erfindungsgemäß hergestellten Perylenpigmente können auch vorteilhaft im Bereich der Elektrophotographie eingesetzt werden, z.B. als Schwarzpigmente für Toner oder als ladungserzeugende Materialien.

Schließlich können die erfindungsgemäß hergestellten Perylenpigmente aufgrund ihrer NIR-Transparenz auch hervorragend zur Schwarzfärbung von Kunststoffen, die nach dem Laserdurchstrahlverfahren verschweißt werden sollen, eingesetzt werden. Sie zeichnen sich hierbei insbesondere durch ihre Temperaturstabilität und Migrationsechtheit gegenüber den üblicherweise eingesetzten trichromen Farbstoffmischungen aus. Die Perylenpigmente der Formel Ia und/oder Ib, in der $R^1$ und $R^2$ Phenylen bedeuten, können vorteilhaft in Kombination mit allen gängigen Lasern (Dioden-Lasern: Emission bei 808 bzw. 940 nm und Festkörperlasern: Emission bei 1064 nm) zum Einsatz kommen, während die Perylenpigmente der Formel Ia und/oder Ib, in der $R^1$ und $R^2$ Naphthylen bedeuten, aufgrund ihrer ins Längerwellige verschobenen NIR-Tranparenz insbesondere in Kombination mit Festkörperlasern verwendbar sind.

Für viele Anwendungen kann es vorteilhaft sein, zunächst flüssige wasserbasierende Präparationen der Perylenpigmente herzustellen, die Wasser oder Gemische von Wasser und organischen Lösungsmitteln als flüssige Phase enthalten.

Ebenfalls vorteilhaft ist ein Einsatz zuvor separat hergestellter Pigmentpräparationen auf Basis eines Polymeren oder eines Polymer-Blends, eines oder mehrerer Polyolefinwachse oder von Mischungen hieraus zur Erzielung homogener, farbstarker Einfärbungen bei niedrigschmelzenden Polymeren (z.B. den meisten gängigen Polyolefinen) oder solchen mit niedriger Schmelzviskosität (z.B. weichgemachtem PVC und PVB sowie blasformbarem PET). Während das bei den polymerbasierenden Pigmentpräparationen ("Masterbatch", "Compound") eingesetzte Trägerpolymer(blend) im allgemeinen identisch mit dem einzufärbenden hochmolekularen synthetischen organischen Material ist, finden zur Herstellung polyolefinwachsbasierender Pigmentpräparationen als Trägermaterial insbesondere homo- und copolymere PE- und PP-Wachse wie Luwax® A (Ethylen-Homopolymerisat; BASF), Luwax EVA (Ethylen-Vinylacetat-Copolymerisat; BASF) oder Licowax® PP 230 (Propylen-Homopolymerisat; Clariant) Verwendung.

## Beispiele

### Herstellung von Perylenpigmenten und Prüfung von erfindungsgemäß hergestellten Perylenpigmenten

### A) Herstellung

**Beispiel** 1

Perylenpigment II: cis/trans-Isomerengemisch der Formel Ia/Ib ($R^1$ = $R^2$ = 1,2-Phenylen; n = 0)

#### a) Herstellung des Rohpigments

In eine gerührte Schmelze von 318 g Phenol bei 70°C wurden 78,4 g Perylen-3,4:9,1 0-tetracarbonsäuredianhydrid, 16,3 g Piperazin und 51,9 g o-Phenylendiamin eingetragen. Nach Erhitzen der Mischung auf 180°C wurde 8 h bei dieser Temperatur gerührt. Das entstehende Reaktionswasser destillierte dabei als Azeotrop mit Phenol ab.

Nach Abkühlen auf 130°C, langsamem Zutropfen von 350 g Methanol und einstündigem Nachrühren bei 60°C wurde das Reaktionsprodukt abfiltriert, mit Methanol gewaschen, bis ein klares Filtrat entstand, im Vakuum bei 100°C getrocknet und danach pulverisiert.

Es wurden 106 g eines schwarzen Pulvers, das in Form von nadelförmigen Kristallen von einer Größe bis zu

über 10 μm vorlag, erhalten, was einer Ausbeute von 99% entspricht.

**b) Pigmentformierung**

50 g des in Schritt a) erhaltenen schwarzen Pulvers wurden in einer mit 2,6 kg Stahlkugeln (Durchmesser 25 mm) gefüllten 1,3 l-Schwingmühle 10 h gemahlen.

Das Mahlgut wurde dann nach Abtrennung der Mahlkugeln in einer Mischung aus 250 g Toluol und 250 g Wasser in einem Autoklav 5 h bei 150°C gerührt. Nach azeotropem Abdestillieren des Toluols wurde das Produkt abfiltriert, mit Wasser gewaschen und im Umlufttrockenschrank bei 100°C getrocknet und danach pulverisiert.

Das erhaltene kristalline schwarze Perylenpigment II wies eine Primärteilchengröße im Bereich von 40 bis 300 nm auf.

**Beispiel 2**

**Perylenpigment III: cis/trans-Isomerengemisch der Formel Ia/Ib ($R^1$ = $R^2$ = 1,8-Naphthylen; n = 0)**

**a) Herstellung des Rohpigments**

In eine gerührte Schmelze von 265 g Phenol bei 70°C wurden 78,4 g Perylen-3,4:9,10-tetracarbonsäuredianhydrid, 16,3 g Piperazin und 75,9 g 1,8-Diaminonaphthalin eingetragen. Nach Erhitzen der Mischung auf 180°C wurde 8 h bei dieser Temperatur gerührt. Das entstehende Reaktionswasser destillierte dabei als Azeotrop mit Phenol ab.

Nach Abkühlen auf 130°C, langsamem Zutropfen von 350 g Methanol und einstündigem Nachrühren bei 60°C wurde das Reaktionsprodukt abfiltriert, mit Methanol gewaschen, bis ein klares Filtrat entstand, im Vakuum bei 100°C getrocknet und danach pulverisiert.

Es wurden 125 g eines schwarzen Pulvers, das in Form von nadelförmigen Kristallen von einer Größe von 90 bis 300 nm vorlag, erhalten, was einer Ausbeute von 98% entspricht.

**b) Pigmentformierung**

50 g des in Schritt a) erhaltenen schwarzen Pulvers wurden in einer mit 2,6 kg Stahlkugeln (Durchmesser 25 mm) gefüllten 1,3 1-Schwingmühle 10 h gemahlen.

Das Mahlgut wurde dann nach Abtrennung der Mahlkugeln in 700 g Xylol in einem Autoklav 5 h bei 180°C gerührt. Nach Abdestillieren des Xylols im Vakuum wurde das Produkt im Umlufttrockenschrank bei 100°C getrocknet und danach pulverisiert.

Das erhaltene kristalline schwarze Perylenpigment III wies eine Primärteilchengröße im Bereich von 30 bis 150 nm auf.

**Beispiel 3**

**Perylenpigment III**

**a) Herstellung des Rohpigments**

Die Herstellung erfolgte wie in Beispiel 2a) beschrieben.

**b) Pigmentformierung**

50 g des in Schritt a) erhaltenen schwarzen Pulvers wurden in einer mit 2,6 kg Stahlkugeln (Durchmesser 25 mm) gefüllten 1,3 l-Schwingmühle 10 h gemahlen.

Das Mahlgut wurde dann nach Abtrennung der Mahlkugeln in 200 g Phenol 8 h bei 180°C gerührt. Nach Abkühlen auf 120°C, Zutropfen von 450 ml Methanol und zweistündigem Nachrühren bei 60°C wurde das Produkt abfiltriert, mit 300 ml Methanol gewaschen, im Umlufttrockenschrank bei 100°C getrocknet und danach pulverisiert.

Das erhaltene, in Form gleichmäßiger Kristalle vorliegende schwarze Perylenpigment III wies eine Primärteilchengröße im Bereich von 20 bis 80 nm auf.

**Beispiel 4**

**Perylenpigment II**

**a) Herstellung des Rohpigments**

Die Herstellung erfolgte wie in Beispiel 1a) beschrieben.

**b) Pigmentformierung**

12 g des in Schritt a) erhaltenen schwarzen Pulvers wurden mit 90 g Natriumchlorid in einer mit 2,6 kg Stahlkugeln (Durchmesser 25 mm) gefüllten 1,3 l-Schwingmühle 24 h bei Raumtemperatur gemahlen.

Das Mahlgut wurde dann nach Abtrennung der Mahlkugeln portionsweise in eine Mischung aus 1000 g Wasser und 200 g konz. Salzsäure eingetragen und 1 h bei Raumtemperatur gerührt. Danach wurde das schwarze Pulver abfiltriert und mit Wasser salzfrei gewaschen.

Es wurden mehrere Ansätze durchgeführt und dann gemischt.

172 g des dabei erhaltenen wasserfeuchten Preßkuchens (Trockengehalt 29%) wurden dann in einer Mischung aus 250 g Toluol und 128 g Wasser in einem Autoklav 5 h bei 150°C gerührt. Nach azeotropem Abdestillieren des Toluols wurde das Produkt abfiltriert, mit Wasser gewaschen, im Umlufttrockenschrank bei 100°C getrocknet und danach pulverisiert.

Das erhaltene kristalline schwarze Perylenpigment II wies eine Primärteilchengröße im Bereich von 40 bis 300 nm auf.

**Beispiel 5**

**Perylenpigment III**

**a) Herstellung des Rohpigments**

Die Herstellung erfolgte wie in Beispiel 2a) beschrieben.

**b) Pigmentformierung**

50 g des in Schritt a) erhaltenen schwarzen Pulvers wurden in einer mit 2,6 kg Stahlkugeln (Durchmesser 25 mm) gefüllten 1,3 l-Schwingmühle 10 h gemahlen.

40 g des erhaltenen Mahlguts wurden dann nach Abtrennung der Mahlkugeln zügig in 420 g 85 gew.-%ige Schwefelsäure gegeben und 24 h bei 25°C gerührt. Anschließend wurde die Mischung in 1700 ml Wasser gefällt. Das Produkt wurde abfiltriert und in 1000 ml Wasser suspendiert.

Die Suspension wurde dann mit 5,9 g 10 gew.-%iger Natronlauge auf einen pH-Wert von 9,8 eingestellt. Nach 15minütigem Rühren, Zugabe von 40 g einer 10 gew.-%igen Lösung eines polymerisierten Kolophoniumharzes (Dertopol®, Willers, Engel & Co.) in 1,5 gew.-%iger Natronlauge und weiterem 15minütigen Nachrühren wurde mit 10 gew.-%iger Salzsäure ein pH-Wert von 2,9 eingestellt. Dann wurde das Produkt abfiltriert, mit Wasser salzfrei gewaschen, im Umlufttrockenschrank bei 55°C getrocknet und danach pulverisiert.

Das erhaltene, in Form heterogener Kristalle vorliegende schwarze Perylenpigment III wies eine Primärteilchengröße im Bereich von 50 bis 600 nm auf.

**Beispiel 6**

**Perylenpigment II**

**a) Herstellung des Rohpigments**

Die Herstellung erfolgte wie in Beispiel 1a) beschrieben.

**b) Pigmentformierung**

35 g des in Schritt a) erhaltenen schwarzen Pulvers wurden mit 210 g Natriumchlorid und 40 g Dipropylenglykol in einem Doppelwellenkneter (Duplex, Fa. IKA) mit einem Knetvolumen von 0,3 l 4 h bei 100°C geknetet.

Die Knetmasse wurde in 10 l Wasser eingetragen und 30 min gerührt. Das Produkt wurde dann abfiltriert, mit Wasser salzfrei gewaschen, im Umlufttrockenschrank bei 100°C getrocknet und danach pulverisiert.
Das erhaltene, in Form homogener Kristalle vorliegende schwarze Perylenpigment II wies eine Primärteilchengröße im Bereich von 30 bis 150 nm auf.

**Beispiel 7**

**Perylenpigment III**

**a) Herstellung des Rohpigments**

Die Herstellung erfolgte wie in Beispiel 2a) beschrieben.

**b) Pigmentformierung**

35 g des in Schritt a) erhaltenen schwarzen Pulvers wurden mit 210 g Natriumchlorid und 40 g Dipropylenglykol in einem Doppelwellenkneter (Duplex, Fa. IKA) mit einem Knetvolumen von 0,3 l 4 h bei 100°C geknetet.
Die Knetmasse wurde in 10 l Wasser eingetragen und 30 min gerührt. Die Suspension wurde dann nach Einstellung eines pH-Wertes von 11,2 mit 10 gew.-%iger Natronlauge mit 35 g einer 10 gew.-%igen Lösung eines polymerisierten Harzes auf Kolophoniumbasis (Dertopol, Willers, Engel & Co.) in 1,5 gew.-%iger Natronlauge versetzt und nach einer Nachrührzeit von 15 min mit 10 gew.-%iger Salzsäure auf den pH-Wert 2,5 eingestellt. Nach weiterem 20minütigem Nachrühren wurde das Produkt abfiltriert, mit Wasser salzfrei gewaschen, im Umlufttrockenschrank bei 100°C getrocknet und danach pulverisiert.
Das erhaltene, in Form homogener Kristalle vorliegende schwarze Perylenpigment III wies eine Primärteilchengröße im Bereich von 30 bis 100 nm auf.

**Beispiel 8**

**Perylenpigment II**

**a) Herstellung des Rohpigments**

Die Herstellung erfolgte wie in Beispiel 1a) beschrieben.

**b) Pigmentformierung**

50 g des in Schritt a) erhaltenen schwarzen Pulvers wurden in einer mit 2,6 kg Stahlkugeln (Durchmesser 25 mm) gefüllten 1,3 l-Schwingmühle 24 h gemahlen.
40 g des erhaltenen Mahlguts wurden dann nach Abtrennung der Mahlkugeln zügig in 400 g 80 gew.-%iger Schwefelsäure gegeben und 24 h bei 50°C gerührt. Anschließend wurde die Mischung in 2 l Wasser gefällt. Das Produkt wurde abfiltriert, mit Wasser neutral gewaschen und dann in 1 l Wasser redispergiert.
Die Suspension wurde dann nach Einstellung eines pH-Wertes von 9,8 mit 10 gew.-%iger Natronlauge mit 40 g einer 10 gew.-%igen Lösung eines polymerisierten Harzes auf Kolophoniumbasis (Dertopol, Willers, Engel & Co) in 1,5 gew.-%iger Natronlauge versetzt und nach einer Nachrührzeit von 15 min mit 10 gew.-%iger Salzsäure auf den pH-Wert 2,5 eingestellt. Nach weiterem 20minütigem Nachrühren wurde das Produkt abfiltriert, mit Wasser salzfrei gewaschen, im Umlufttrockenschrank bei 100°C getrocknet und danach pulverisiert.
Das erhaltene, in Form heterogener Kristalle vorliegende schwarze Perylenpigment II wies eine Primärteilchengröße im Bereich von 30 bis 150 nm auf.

**Beispiel 9**

**Perylenpigment III**

**a) Herstellung des Perylenrohpigments**

Die Herstellung erfolgte wie in Beispiel 2a) beschrieben.

**b) Pigmentformierung**

50 g des in Schritt a) erhaltenen schwarzen Pulvers wurden in einer mit 2,6 kg Stahlkugeln (Durchmesser 25 mm) gefüllten 1,3 l-Schwingmühle 10 h vermahlen.

40 g des Mahlguts wurden nach Abtrennung der Mahlkugeln in 240 g Chinolin 5 h bei 240°C gerührt. Nach Abkühlen auf 130°C wurde die Masse durch vorsichtiges Zutropfen von 250 g Methanol verdünnt. Nach 30minütigem Nachrühren wurde das Produkt abfiltriert, mit 1000 ml Methanol gewaschen, im Vakuumtrockenschrank getrocknet und danach pulverisiert.

Das erhaltene kristalline schwarze Perylenpigment III wies eine Primärteilchengröße im Bereich von 50 bis 200 nm auf.

**Beispiel 10**

**Perylenpigment III**

**a) Herstellung des Perylenrohpigments**

Die Herstellung erfolgte wie in Beispiel 2a) beschrieben.

**b) Pigmentformierung**

50 g des in Schritt a) erhaltenen schwarzen Pulvers wurden in einer mit 2,6 kg Stahlkugeln (Durchmesser 25 mm) gefüllten 1,3 l-Schwingmühle 10 h vermahlen.

40 g des Mahlguts wurden nach Abtrennung der Mahlkugeln in 220 g Dimethylnaphthalin 8 h bei 240°C gerührt. Nach Abkühlen auf 130°C wurde die Masse durch vorsichtiges Zutropfen von 200 g Methanol verdünnt. Nach 30minütigem Nachrühren wurde das Produkt abfiltriert, mit 1000 ml Methanol gewaschen und dann bei 60°C in 300 ml Wasser suspendiert.

Die Suspension wurde dann mit 0,5 g 10 gew.-%iger Natronlauge auf einen pH-Wert von 10,1 eingestellt. Nach 5minütigem Rühren, Zugabe von 40 g einer 10 gew.-%igen Lösung eines polymerisierten Kolophoniumharzes (Dertopol, Willers, Engel & Co.) in 1,5 gew.-%iger Natronlauge und weiterem 15minütigen Nachrühren wurde mit 10 gew.-%iger Salzsäure ein pH-Wert von 3,2 eingestellt. Dann wurde das Produkt abfiltriert, mit Wasser salzfrei gewaschen, im Umlufttrockenschrank bei 55°C getrocknet und danach pulverisiert.

Das erhaltene kristalline schwarze Perylenpigment III wies eine Primärteilchengröße im Bereich von 50 bis 200 nm auf.

**Beispiel 11**

**Perylenpigment III**

**a) Herstellung des Perylenrohpigments**

Die Herstellung erfolgte wie in Beispiel 2a) beschrieben.

**b) Pigmentformierung**

Das Perylenrohpigment wurde auf einer Laborstrahlmühle mit einem Durchsatz von 8 kg/h und einem Mahldruck von 8 bar bei einem Injektionsdruck von 9 bar gemahlen.

Das erhaltene, in Form heterogener Kristalle vorliegende schwarze Perylenpigment III wies eine Primärteilchengröße im Bereich von 80 bis 250 nm auf.

**Beispiel 12**

**Perylenpigment II im Gemisch mit C.I. Pigment Yellow 185**

**a) Herstellung des Perylenrohpigments**

Die Herstellung erfolgte wie in Beispiel 1a) beschrieben.

**b) Pigmentformierung**

Eine Mischung von 41,7 g des in Schritt a) erhaltenen schwarzen Pulvers und 8,3 g C.I. Pigment Yellow 185 wurde in einer mit 2,6 kg Stahlkugeln (Durchmesser 25 mm) gefüllten 1,3 l-Schwingmühle 20 h gemahlen.

40 g des erhaltenen Mahlguts wurden dann nach Abtrennung der Mahlkugeln in 240 g Xylol unter Rühren 3 h unter Rückfluß erhitzt. Nach azeotropem Abdestillieren des Xylols wurde das Produkt im Vakuum bei 100°C getrocknet und danach pulverisiert. Das erhaltene schwarze Pulver lag überwiegend in Form von Kristallen mit einer Primärteilchengröße von 40 bis 400 nm vor.

**Beispiel 13**

**Perylenpigment II**

**a) Herstellung des Perylenrohpigments**

Eine Mischung von 78,4 g Perylen-3,4:9,10-tetracarbonsäuredianhydrid und 45,4 g o-Phenylendiamin in 350 g N-Methylimidazol wurde unter Rühren auf 180°C erhitzt und 6 h bei dieser Temperatur gerührt. Dabei setzte ab Erreichen einer Innentemperatur von etwa 170°C das Abdestillieren des Reaktionswassers ein.

Nach Abkühlen auf 130°C, langsamem Zutropfen von 350 g Methanol und einstündigem Nachrühren bei 65°C wurde das Reaktionsprodukt abfiltriert, zuerst mit 800 g Methanol, dann mit 500 ml einer 5 gew.-%igen Essigsäure und abschließend mit 1,5 l Wasser gewaschen, im Umlufttrockenschrank bei 100°C getrocknet und danach pulverisiert.

Es wurden 106,5 g eines schwarzen Pulvers, dessen Primärkristalle eine Größe von mehreren μm aufwiesen, erhalten, was einer Ausbeute von 99,4% entspricht.

**b) Pigmentformierung**

50 g des in Schritt a) erhaltenen schwarzen Pulvers wurden in einer mit 2,6 kg Stahlkugeln (Durchmesser 25 mm) gefüllten 1,3 l-Schwingmühle 10 h gemahlen.

Nach Abtrennung der Mahlkugeln wurden 40 g des Mahlguts in 200 g N-Methylimidazol 5 h bie 180°C gerührt. Nach Abkühlen auf Raumtemperatur wurde das Produkt abfiltriert und zuerst mit 1000 ml einer 5 gew.-%igen Essigsäure und dann mit Wasser neutral gewaschen, im Umlufttrockenschrank bei 100°C getrocknet und danach pulverisiert.

Das erhaltene kristalline schwarze Perylenpigment II wies eine Primärteilchengröße im Bereich von 50 bis 200 nm auf.

**Beispiel 14**

**Perylenpigment II**

**Herstellung des Rohpigments**

Es wurde analog Beispiel 13a) vorgegangen, jedoch wurden anstelle von N-Methylimidazol 300 g Imidazol eingesetzt.

Es wurden 105 g eines schwarzen Pulvers, dessen Primärkristalle eine Größe von mehreren μm aufwiesen, erhalten, was einer Ausbeute von 98% entspricht.

**Beispiel 15**

**Perylenpigment III**

Es wurde analog Beispiel 13a) vorgegangen, jedoch wurden 66,4 g 1,8-Diaminonaphthalin und 450 g N-Methylimidazol eingesetzt, und zum Verdünnen wurden 450 g Methanol zugetropft.

Es wurden 123,4 g eines schwarzen Pulvers erhalten, was einer Ausbeute von 97% entspricht. Die Primärkristalle waren von pigmentärer Dimension und wiesen eine Größe im Bereich von 50 bis 200 nm auf.

## B) Prüfung

### B1) Bestimmung der Schwarzzahl

Zur Bestimmung der Purtonkoloristik wurde eine Mischung von jeweils 1,0 g des jeweiligen Pigments und 9,0 g eines Alkyd/Melamin-Einbrennlacks (Bindemittelgehalt von 43 Gew.-%, mit Xylol auf 35 Gew.-% eingestellt) mit 10 ml Glasperlen (Durchmesser 3 mm) in einer 30 ml-Glasflasche 60 min auf einem Skandex-Dispergieraggregat geschüttelt. Die erhaltene Paste wurde anschließend als 150 μm dicke Schicht auf einen Karton aufgetragen, abgelüftet und 30 min bei 130°C eingebrannt.

Nach farbmetrischer Auswertung mit einem Spektralphotometer Spectraflash SF 600 plus (Fa. Datacolor) wurde die Schwarzzahl nach der folgenden Formel aus dem Normfarbwert Y berechnet:

$$\text{Schwarzzahl} = 100 \times \log (100/Y)$$

Die ermittelten Schwarzzahlen sind in Tabelle 1 zusammengestellt. Zum Vergleich sind die analog für ein Rußpigment (Monarch 1400, Fa. Cabot) (V1) sowie für das analog Beispiel 2 der WO-A-03/10241 hergestellte Isomerengemisch (V2) ermittelten Schwarzzahlen mitaufgeführt.

Tabelle 1

| Pigment aus | Schwarzzahl |
|---|---|
| Beispiel 1 | 215 |
| Beispiel 2 | 246 |
| Beispiel 3 | 268 |
| Beispiel 4 | 218 |
| Beispiel 5 | 232 |
| Beispiel 6 | 250 |
| Beispiel 7 | 254 |
| Beispiel 8 | 232 |
| Beispiel 9 | 285 |
| Beispiel 10 | 243 |
| Beispiel 11 | 240 |
| Beispiel 12 | 230 |
| Beispiel 13 | 223 |
| Vergleichsbeispiel V1 | 268 |
| Vergleichsbeispiel V2 | 198 |

### B2) Prüfung der Wärmeentwicklung

Um die Innenraumerwärmung unter Sonneneinstrahlung zu simulieren, die durch Bleche (Standardaufbau: KTL-Schicht plus Standardfüller lackiert) verursacht wird, die mit schwarz pigmentierten Lacken beschichtet sind, wurden die lackierten Bleche (Buntpasten analog B1), jedoch nur 5%ig pigmentiert; Schichtdicke nur 30 μm) als Deckel mit der lackierten Seite nach oben auf eine Styroporbox gelegt und nach der in der EP-A-1 219 684 beschriebenen Methode mit einer Halogenlampe im Abstand von 40 cm mit einer Leistung von 750 W bestrahlt. Die Innentemperatur in der Box wurde dann nach 10, 20, 30 und 35 min Bestrahlung gemessen.

Die Meßergebnisse sind in Tabelle 2 zusammengefaßt. Zum Vergleich sind die für das grundierte Blech (V0) sowie für das analog unter Verwendung eines Rußpigments (Flammruß FW 200, Degussa) (V3) lackierte Blech mitaufgeführt.

Tabelle 2

| Pigment aus | Innenraumtemperatur nach | | | |
|---|---|---|---|---|
| | 10 min | 20 min | 30 min | 35 min |
| Beispiel 1 | 59°C | 70°C | 73°C | 73°C |
| Beispiel 3 | 62°C | 72°C | 75°C | 75°C |
| grundiertes Blech (V0) | 58°C | 69°C | 72°C | 72°C |
| Vergleichsbeispiel V3 | 69°C | 82°C | 83°C | 82°C |

Diese Ergebnisse belegen, daß bei den mit den erfindungsgemäß hergestellten Perylenpigmenten lackierten Blechen im Vergleich zu V3 eine höhere Transmission im IR-Bereich vorliegt, was zu einer stärkeren Reflexion der IR-Strahlung am Untergrund und damit zu einer geringeren Innenraumerwärmung, also einem besseren Wärmeschutz, führt. Der Vergleich mit dem grundierten Blech (V0) zeigt, daß die beobachtete Resterwärmung fast ausschließlich auf die Absorption der IR-Strahlung durch die Grundierung zurückzuführen ist.

**B3) Einfärbung von Kunststoffen**

**a) Polyethylen-LD:**

Zur Bestimmung der Purtonkoloristik in PE-LD wurden das jeweilige Pigment und PE-LD-Pulver (Pigmentkonzentration 0,2 Gew.-%) vermischt und auf einem Mischwalzwerk bei einer Walzentemperatur von 160°C und 200 Walzenumdrehungen zu einem Walzfell der Stärke 0,4 mm verarbeitet. Das Walzfell wurde anschließend in einer Presse mit Distanzrahmen (1 mm) bei 180°C zu Platten verpreßt.
Die jeweils erhaltenen schwarz gefärbten Platten wurden farbmetrisch mit einem Spektralphotometer Spectraflash SF 600 plus (Fa. Datacolor) ausgewertet.
Die erhaltenen Meßergebnisse sind in Tabelle 3 zusammengestellt.

Tabelle 3

| Pigment aus | a* | b* |
|---|---|---|
| Beispiel 1 | 0,35 | 0,07 |
| Beispiel 3 | -0,04 | -2,01 |
| Beispiel 8 | -0,04 | 0,53 |
| Beispiel 11 | 0,90 | -1,90 |

**b) Polyethylen-HD und technische Kunststoffe:**

Zur Bestimmung der Purtonkoloristik in PE-HD (Lupolen® 6031 M; Basell), Polypropylen (PP; Moplen® 466R; Basell), Polycarbonat (PC; Makrolon® 2800 N; Bayer), Polyamid [6] (PA 6; Ultramid® BS 700; BASF), Acryinitril/Butadien/Styrol-Copolymer (ABS; Terluran® GP 22; BASF) und Polymethylmethacrylat (PMMA; Plexiglas 7 N; Röhm) wurden das jeweilige Pigment und Polymer (Pigmentkonzentration 0,2 Gew.-%) in einer Glasflasche 30 min auf einem Rollbrett vermischt, einmal über einen Doppelschneckenextruder (ZSE 27 / GL-44D; Fa. Leistritz) bei der in Tabelle 4 angegebenen Massetemperatur $T_1$°C homogenisiert und granuliert. Das so erhaltene eingefärbte Granulat wurde dann über eine Spritzgußmaschine (Allrounder; Fa. Arburg) bei der Abspritztemperatur $T_2$°C zu Plättchen verarbeitet.
Die jeweils erhaltenen schwarz gefärbten Spritzplättchen wurden farbmetrisch mit einem Spektralphotometer (Spectraflash SF 600 X; Fa. Datacolor) ausgewertet.
Die erhaltenen Meßergebnisse sowie die gemäß DIN 53772 in der Weißaufhellung 1:10 in den jeweiligen Polymeren bestimmten Temperaturbeständigkeiten TB [°C] sind in Tabelle 4 zusammengestellt.

Tabelle 4

| Polymer | $T_1$ [°C] | $T_2$ [°C] | Pigment aus Bsp. 1 | | | Pigment aus Bsp. 3 | | |
|---|---|---|---|---|---|---|---|---|
| | | | a* | b* | TB [°C] | a* | b* | TB [°C] |
| HDPE | 215 | 220 | 4,3 | -6,8 | 320 | 2,6 | -6,5 | >320 |
| PP | 200 | 240 | -0,6 | 3,1 | 320 | 1,1 | -4,2 | >320 |
| ABS | 250 | 240 | 7,1 | -13,1 | 320 | 3,0 | -9,3 | 310 |
| PA 6 | 240 | 240 | 3,6 | -0,5 | 300 | 2,2 | -5,7 | >320 |
| PMMA | 265 | 240 | 0,0 | 6,2 | >320 | 0,8 | 0,2 | >320 |
| PC | 290 | 280 | 2,2 | 6,8 | >320 | -0,1 | 0,2 | >320 |

**B4) Einfärbung von Lacken**

**a) Bestimmung der Purtonkoloristik**

Gemäß B1) wurde unter Einsatz des Pigments aus Beispiel 3 eine Buntpaste hergestellt und lackiert.

Die farbmetrische Auswertung der schwarzen Lackierung mit einem Spektralphotometer Spectraflash SF 600 plus (Fa. Datacolor) ergab folgende Meßwerte:
a* = 0,2; b* = -0,8.

**b) Koloristik in der Weißaufhellung**

1,6 g der Buntpaste aus B4a) wurden mit 1,0 g einer 40 gew.-%ig mit Titandioxid (Kronos 2310) pigmentierten Weißpaste (Weißaufhellung ca. 1/3 Standardfarbtiefe) gemischt, als 150 µm dicke Schicht auf einen Karton aufgetragen, abgelüftet und 30 min bei 130°C eingebrannt.

Die farbmetrische Auswertung der grauen Lackierung mit einem Spektralphotometer Spectraflash SF 600 plus (Fa. Datacolor) ergab folgende Messwerte:
a* = 5,3; b* = -14,4.

**Patentansprüche**

**1.** Verfahren zur Herstellung von schwarzen Perylenpigmenten, die eines der Isomere der Formel Ia oder Ib

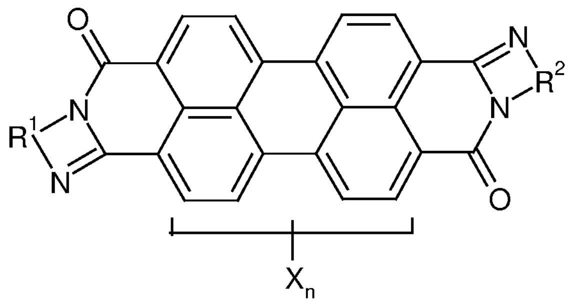

Ia

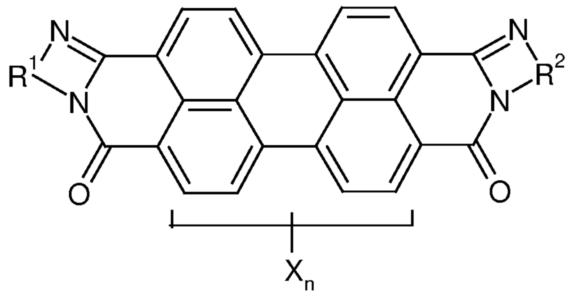

Ib

in der die Variablen folgende Bedeutung haben:

$R^1$, $R^2$ unabhängig voneinander Phenylen, Naphthylen oder Pyridylen, das jeweils ein- oder mehrfach durch $C_1$-$C_{12}$-Alkyl, $C_1$-$C_6$-Alkoxy, Hydroxy, Nitro und/oder Halogen substituiert sein kann;
X Halogen;
n 0 bis 4,

oder eine Mischung beider Isomere enthalten und eine Schwarzzahl ≥ 210 in einem Alkyd/Melamin-Einbrennlack aufweisen, **dadurch gekennzeichnet, daß** man die bei der Synthese erhaltenen Rohpigmente

a) einer Zerkleinerung und einer Rekristallisation in flüssigem Medium oder
b) einer Zerkleinerung unter gleichzeitiger Rekristallisation unterzieht,

wobei bei der Rekristallisation als flüssiges Medium mindestens ein organisches Lösungsmittel ausgewählt aus Alkoholen, Etheralkoholen, Ethern, Ketonen, aliphatischen Carbonsäuren, Carbonsäureamiden, Carbonsäureestern, Kohlenwasserstoffen oder stickstoffhaltigen, nichtannelierten Heteroaromaten verwendet wird.

**2.** Verfahren nach Anspruch 1, bei denen die Reste $R^1$ und $R^2$ gleich sind und unsubstituiertes Phenylen oder Naphthylen bedeuten.

**3.** Verfahren nach Anspruch 1 oder 2, **dadurch gekennzeichnet, daß** man die Rohpigmente einer energiereichen Pulvermahlung unterzieht.

**4.** Verfahren nach Anspruch 1 oder 2, **dadurch gekennzeichnet, daß** man die Rohpigmente zunächst einer Trockenmahlung in An- oder Abwesenheit eines Salzes als Mahlhilfsmittel und dann einer Rekristallisation in einem organischen Lösungsmittel, gewünschtenfalls im Gemisch mit Wasser, in der Wärme unterzieht.

**5.** Verfahren nach Anspruch 1 oder 2, **dadurch gekennzeichnet, daß** man die Rohpigmente in Gegenwart eines rekristallisierend wirkenden organischen Lösungsmittels und eines anorganischen Salzes einer Knetung in der Wärme unterzieht.

**6.** Verfahren nach Anspruch 1 oder 2, **dadurch gekennzeichnet, daß** man die Rohpigmente einer wäßrigen Naßmahlung in Gegenwart eines rekristallisierend wirkenden organischen Lösungsmittels unterzieht.

**7.** Verfahren zur Herstellung von schwarzen Perylenpigmenten, die eines der Isomere der Formel Ia oder Ib

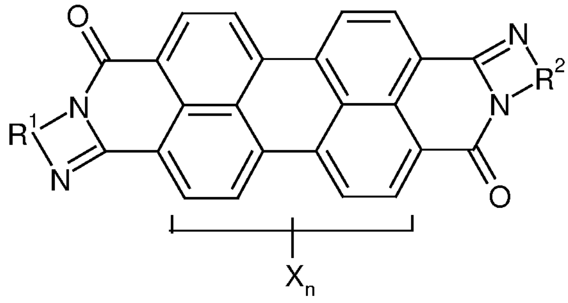

Ia

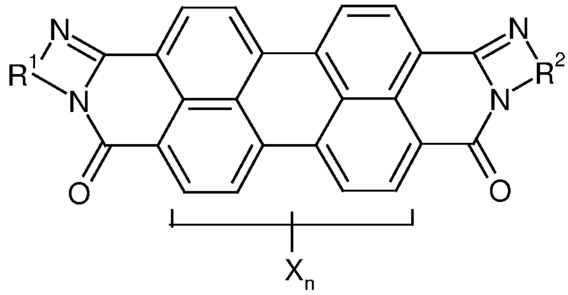

Ib

in der die Variablen folgende Bedeutung haben:

$R^1$, $R^2$ unabhängig voneinander Phenylen, Naphthylen oder Pyridylen, das jeweils ein- oder mehrfach durch $C_1$-$C_{12}$-Alkyl, $C_1$-$C_6$-Alkoxy, Hydroxy, Nitro und/oder Halogen substituiert sein kann;
X Halogen;
n 0 bis 4,

oder eine Mischung beider Isomere enthalten und eine Schwarzzahl ≥ 230 in einem Alkyd/Melamin-Einbrennlack aufweisen,
**dadurch gekennzeichnet, daß** man die bei der Synthese erhaltenen Rohpigmente, nach einer Zerkleinerung, einer Quellung in einer konzentrierten Säure mit einer Konzentration von 70 bis 85 Gew.% unterzieht.

**8.** Verfahren nach Anspruch 1 oder 7, **dadurch gekennzeichnet, daß** man die Rohpigmente durch Kondensation von Perylen-3,4:9,10-tetracarbonsäuredianhydrid mit einem aromatischen ortho- bzw. peri-Diamin, das den Arylenrest $R^1$ oder $R^2$ und gewünschtenfalls Reste X aufweist, und anschließende Cyclisierung in Gegenwart von Phenol oder einem stickstoffhaltigen, nichtannelierten Heteroaromaten herstellt.

**9.** Verfahren nach den Ansprüchen 1 bis 8, **dadurch gekennzeichnet, daß** man es in Gegenwart eines Pigmentsynergisten und/oder Pigmentadditivs durchführt.

## Claims

**1.** A process for preparing black perylene pigments comprising one of the isomers of the formula Ia or Ib

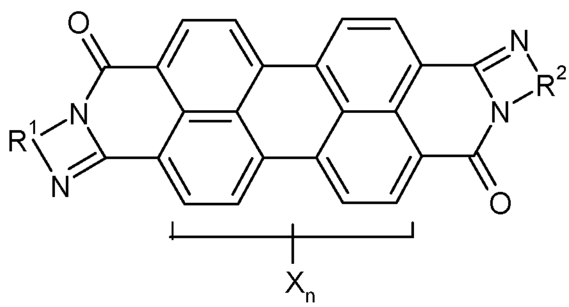

Ia

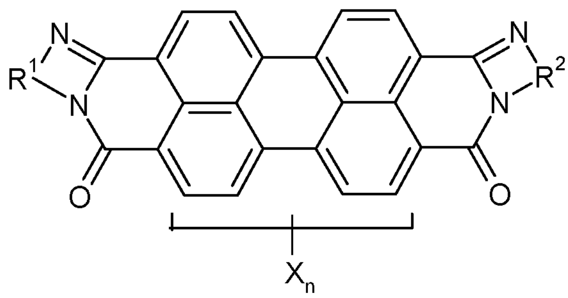

Ib

in which the variables are defined as follows:

$R^1$, $R^2$ are independently phenylene, naphthylene or pyridylene, each of which may be mono- or polysubstituted by $C_1$-$C_{12}$-alkyl, $C_1$-$C_6$-alkoxy, hydroxyl, nitro and/or halogen;
X is halogen;
n is from 0 to 4,

or comprising a mixture of both isomers and having a blackness value ≥ 210 in an alkyd/melamine baking varnish, wherein the crude pigments obtained in the synthesis are subjected

a) to a comminution and to a recrystallization in a liquid medium or
b) to a comminution with simultaneous recrystallization,

wherein the liquid medium used in the recrystallization is at least one organic solvent selected from alcohols, ether alcohols, ethers, ketones, aliphatic carboxylic acids, carboxamides, carboxylic esters, hydrocarbons and nitrogen-containing, nonfused heteroaromatics.

**2.** The process according to claim 1, in which the $R^1$ and $R^2$ radicals are the same and are unsubstituted phenylene or naphthylene.

**3.** The process according to claim 1 or 2, wherein the crude pigments are subjected to a high-energy powder grinding.

**4.** The process according to claim 1 or 2, wherein the crude pigments are first subjected to a dry grinding in the presence or absence of a salt as a grinding assistant and then to a recrystallization in an organic solvent, if desired in a mixture with water, under hot conditions.

**5.** The process according to claim 1 or 2, wherein the crude pigments are subjected to kneading under hot conditions in the presence of an organic solvent having recrystallizing action and of an inorganic salt.

**6.** The process according to claim 1 or 2, wherein the crude pigments are subjected to an aqueous wet grinding in the presence of an organic solvent having recrystallizing action.

**7.** A process for preparing black perylene pigments comprising one of the isomers of the formula Ia or Ib

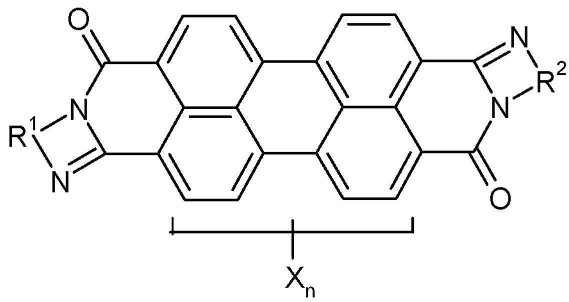

Ia

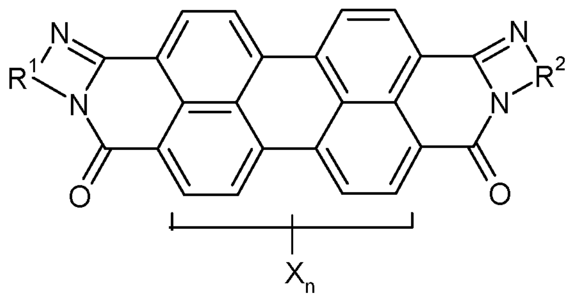

Ib

in which the variables are defined as follows:

$R^1$, $R^2$ are independently phenylene, naphthylene or pyridylene, each of which may be mono- or polysubstituted by $C_1$-$C_{12}$-alkyl, $C_1$-$C_6$-alkoxy, hydroxyl, nitro and/or halogen;
X is halogen;
n is from 0 to 4,

or comprising a mixture of both isomers and having a blackness value ≥ 230 in an alkyd/melamine baking varnish, wherein the crude pigments obtained in the synthesis, after a comminution, are subjected to swelling in a concentrated acid having a concentration of 70% to 85% by weight.

8. The process according to claim 1 or 7, wherein the crude pigments are prepared by condensing perylene-3,4:9,10-tetracarboxylic dianhydride with an aromatic ortho- or peri-diamine which has the arylene radical $R^1$ or $R^2$, and if desired X radicals, and subsequently cyclizing in the presence of phenol or a nitrogen-containing, nonfused heteroaromatic.

9. The process according to claims 1 to 8, wherein said process is performed in the presence of a pigment synergist and/or pigment additive.

## Revendications

1. Procédé de fabrication de pigments de pérylène noirs, qui contiennent un des isomères de formule Ia ou Ib

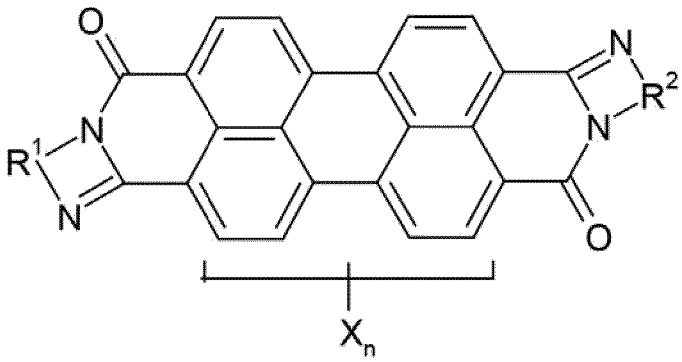

Ia

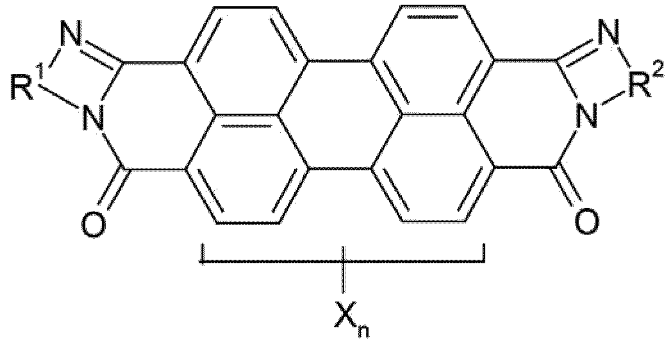

Ib

dans lesquelles les variables ont la signification suivante :

$R^1$, $R^2$ indépendamment l'un de l'autre phénylène, naphtylène ou pyridylène, qui peut à chaque fois être substitué une ou plusieurs fois par alkyle en $C_1$-$C_{12}$, alcoxy en $C_1$-$C_6$, hydroxy, nitro et/ou halogène ;
X halogène ;
n 0 à 4,

ou un mélange des deux isomères, et qui présentent un indice de noir ≥ 210 dans un vernis au four alkyde/mélamine, **caractérisé en ce que** les pigments bruts obtenus lors de la synthèse sont soumis

a) à un broyage et à une recristallisation dans un milieu liquide ou
b) à un broyage avec recristallisation simultanée,

au moins un solvant organique choisi parmi les alcools, les éther-alcools, les éthers, les cétones, les acides carboxyliques aliphatiques, les amides d'acides carboxyliques, les esters d'acides carboxyliques, les hydrocarbures ou les composés hétéroaromatiques non annelés contenant de l'azote étant utilisé en tant que milieu liquide lors de la recristallisation.

**2.** Procédé selon la revendication 1, dans lequel les radicaux $R^1$ et $R^2$ sont identiques et signifient phénylène ou naphtylène non substitué.

**3.** Procédé selon la revendication 1 ou 2, **caractérisé en ce que** les pigments bruts sont soumis à un broyage en poudre de haute énergie.

**4.** Procédé selon la revendication 1 ou 2, **caractérisé en ce que** les pigments bruts sont tout d'abord soumis à un broyage à sec en la présence ou en l'absence d'un sel en tant qu'adjuvant de broyage, puis à une recristallisation dans un solvant organique, si on le souhaite en mélange avec de l'eau, à chaud.

**5.** Procédé selon la revendication 1 ou 2, **caractérisé en ce que** les pigments bruts sont soumis à un malaxage à chaud en présence d'un solvant organique à action de recristallisation et d'un sel inorganique.

**6.** Procédé selon la revendication 1 ou 2, **caractérisé en ce que** les pigments bruts sont soumis à un broyage humide aqueux en présence d'un solvant organique à action de recristallisation.

**7.** Procédé de fabrication de pigments de pérylène noirs, qui contiennent un des isomères de formule Ia ou Ib

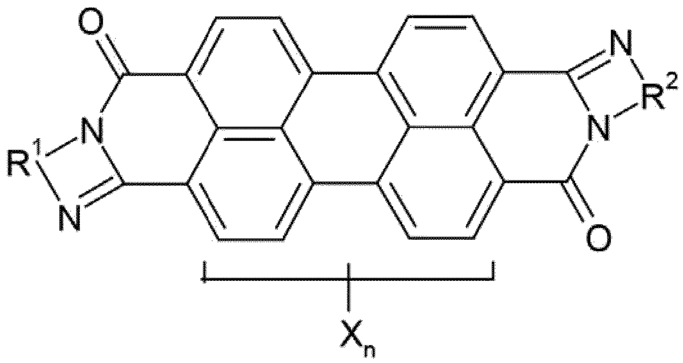

Ia

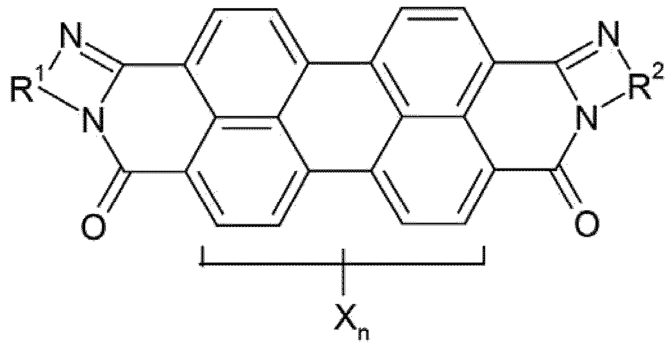

Ib

dans lesquelles les variables ont la signification suivante :

$R^1$, $R^2$ indépendamment l'un de l'autre phénylène, naphtylène ou pyridylène, qui peut à chaque fois être substitué une ou plusieurs fois par alkyle en $C_1$-$C_{12}$, alcoxy en $C_1$-$C_6$, hydroxy, nitro et/ou halogène ;
X halogène ;
n 0 à 4,

ou un mélange des deux isomères, et qui présentent un indice de noir ≥ 230 dans un vernis au four alkyde/mélamine, **caractérisé en ce que** les pigments bruts obtenus lors de la synthèse sont soumis, après un broyage, à un gonflement dans un acide concentré ayant une concentration de 70 à 85 % en poids.

**8.** Procédé selon la revendication 1 ou 7, **caractérisé en ce que** les pigments bruts sont fabriqués par condensation de dianhydride de l'acide pérylène-3,4:9,10-tétracarboxylique avec une ortho- ou péridiamine aromatique, qui comporte le radical arylène $R^1$ ou $R^2$ et si on le souhaite des radicaux X, puis cyclisation en présence de phénol ou d'un composé hétéroaromatique non annelé contenant de l'azote.

**9.** Procédé selon les revendications 1 à 8, **caractérisé en ce qu'**il est réalisé en présence d'un synergiste de pigment et/ou d'un additif de pigment.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0310241 A
- WO 0310242 A
- CH 373844
- GB 972485 A
- JP 7157681 A
- US 20040215015 A
- EP 1219684 A